# EUROPÄISCHE PATENTANMELDUNG

(11) **EP 0 798 413 A1**
(43) Veröffentlichungstag der Anmeldung: **01.10.1997**
(21) Anmeldenummer: 97810094.9
(22) Anmeldetag: 24.02.1997
(51) Int. Cl.: D06P 1/642, D06P 5/06, D06P 3/16

(54) **Verfahren zum Färben von natürlichen oder synthetischen Polyamidfasermaterialien**

(30) Priorität: 04.03.1996 CH 562/96
(71) Anmelder: Ciba Specialty Chemicals Holding Inc., 4057 Basel (CH)
(72) Erfinder: Adam, Jean-Marie, 68300 Rosenau (FR); Bacher, Jean-Pierre, 68220 Buschwiller (FR); Casi, Francine, Eschentzwiller (FR)

(57) **Zusammenfassung**

Verfahren zum Färben von natürlichen oder synthetischen Polyamidfasermaterialien, dadurch gekennzeichnet, dass man diese Fasermaterialien mit mindestens einem anionischen Säurefarbstoff der Formel 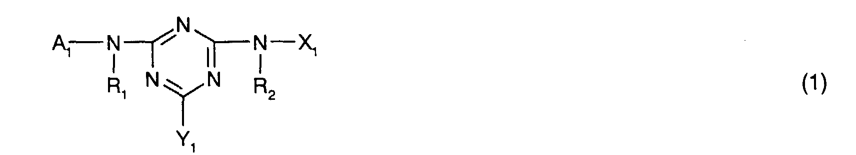 färbt und das genannte Fasermaterial während oder nach dem Färbeprozess mit einem farblosen, sulfo- oder sulfatogruppenhaltigen, mindestens zwei faserreaktive Gruppen enthaltenden Fixiermittel behandelt, wobei
R₁ und R₂ unabhängig voneinander Wasserstoff oder gegebenenfalls substituiertes C₁-C₄-Alkyl sind,
X₁ gegebenenfalls substituiertes C₁-C₈-Alkyl, C₅-C₇-Cycloalkyl, Phenyl oder Naphthyl ist oder der Rest der Formel -N(R₂)-X₁ ein gegebenenfalls weitere Heteroatome enthaltender Ring ist,
Y₁ ein Rest der Formel 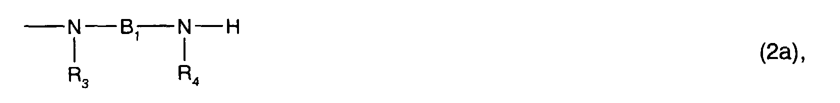 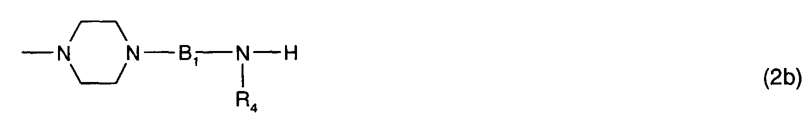 oder 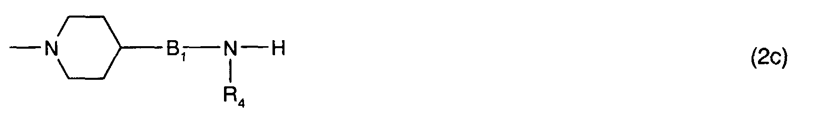 ist, worin B₁ ein farbloses organisches Brückenglied,
R₃ Wasserstoff oder gegebenenfalls substituiertes C₁-C₄-Alkyl, und
R₄ Wasserstoff oder gegebenenfalls substituiertes C₁-C₈-Alkyl, C₅-C₇-Cycloalkyl, Phenyl oder Naphthyl ist, und A₁ die in Anspruch 1 angegebenen Bedeutungen hat.

## Beschreibung

Die vorliegende Erfindung betrifft ein Verfahren zum Färben von natürlichen oder synthetischen Polyamidfasermaterialien unter Verwendung von Fixiermitteln, sowie neue Fixiermittel.

Die Praxis des Färbens hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Färbeverfahren, welche verbesserte Eigenschaften, insbesondere in Bezug auf die Applikation und Echtheiten der erhaltenen Färbungen, aufweisen.

Für das Färben werden heute Verfahren gefordert, gemäss welchen die erhaltenen Färbungen bei hohem Ausziehgrad und guter färberische Ausbeute gute Echtheiten, insbesondere Nassechtheiten, aufweisen. Von den bekannten Verfahren werden diese Anforderungen nicht in allen Eigenschaften erfüllt.

Der vorliegenden Erfindung liegt daher die Aufgabe zugrunde, neue, verbesserte Verfahren für das Färben von Fasermaterialien zu finden, welche die oben charakterisierten Qualitäten in hohem Masse besitzen.

Es hat sich gezeigt, dass mit dem weiter unten definierten Verfahren die gestellte Aufgabe weitgehend gelöst wird.

Gegenstand der vorliegenden Erfindung ist daher ein Verfahren zum Färben von natürlichen oder synthetischen Polyamidfasermaterialien, welches dadurch gekennzeichnet ist, dass man diese Fasermaterialien mit mindestens einem anionischen Säurefarbstoff der Formel 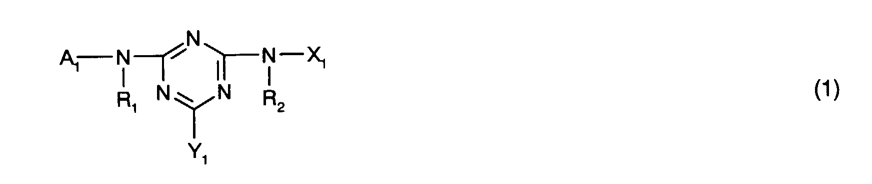 färbt und das genannte Fasermaterial während oder nach dem Färbeprozess mit einem farblosen, sulfo- oder sulfatogruppenhaltigen, mindestens zwei faserreaktive Gruppen enthaltenden Fixiermittel behandelt, wobei
R₁ und R₂ unabhängig voneinander Wasserstoff oder gegebenenfalls substituiertes C₁-C₄-Alkyl sind,
X₁ gegebenenfalls substituiertes C₁-C₈-Alkyl, C₅-C₇-Cycloalkyl, Phenyl oder Naphthyl ist oder der Rest der Formel -N(R₂)-X₁ ein gegebenenfalls weitere Heteroatome enthaltender Ring ist,
Y₁ ein Rest der Formel 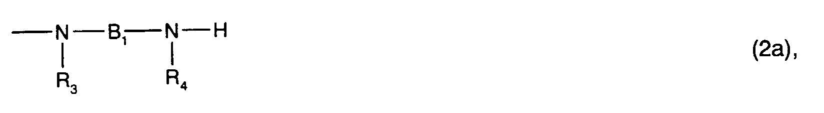 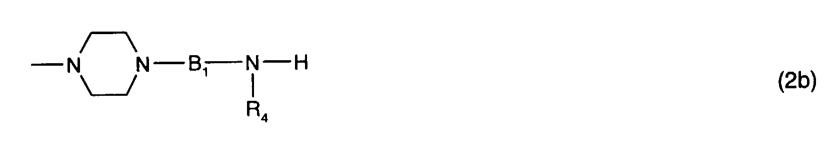 oder 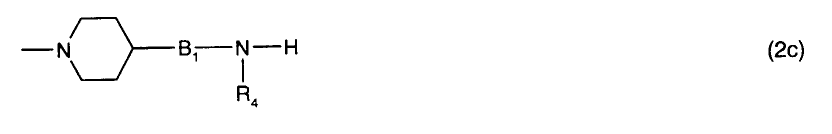
ist, worin
B₁ ein farbloses organisches Brückenglied,
R₃ Wasserstoff oder gegebenenfalls substituiertes C₁-C₄-Alkyl, und
R₄ Wasserstoff oder gegebenenfalls substituiertes C₁-C₈-Alkyl, C₅-C₇-Cycloalkyl, Phenyl oder Naphthyl ist, und
A₁ der Rest eines Monoazofarbstoffes der Formel 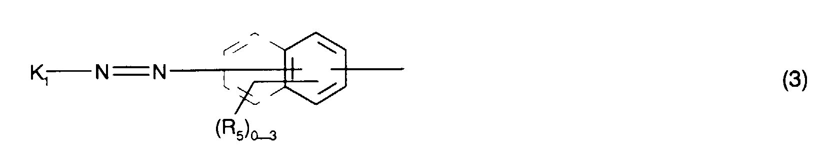
ist, worin
K₁ ein Rest der Benzol- oder Naphthalinreihe oder ein heterocyclischer Rest ist und (R₅)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Ureido, Halogen, Carboxy und Sulfo steht, oder
A₁ der Rest eines Polyazo-, Metallkomplexazo-, Anthrachinon-, Formazan-, Phthalocyanin- oder Dioxazinfarbstoffes ist.

Als C₁-C₄-Alkyl kommen für R₁, R₂ und R₃ unabhängig voneinander z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo, Sulfato, Cyano oder Carboxy substituiert sein. Bevorzugt als Alkylreste sind die entsprechenden unsubstituierten Reste.

Als C₁-C₄-Alkyl kommen für R₅ z.B. Methyl, Aethyl, Propyl, Isopropyl, Butyl, sek.-Butyl, tert.-Butyl oder Isobutyl in Betracht.

Als C₁-C₈-Alkyl kommen für R₄ und X₁ unabhängig voneinander vorzugsweise C₁-C₄-Alkylreste, wie z.B. Methyl, Aethyl, Propyl, Isopropyl, Butyl, sek.-Butyl, tert.-Butyl oder Isobutyl, in Betracht. Die genannten Alkylreste können unsubstituiert oder z.B. durch Hydroxy, Sulfo, Sulfato, Cyano oder Carboxy substituiert sein. Bevorzugt sind hierbei die unsubstituierten Reste.

Als C₁-C₄-Alkoxy kommen für R₅ z.B. Methoxy, Äthoxy, Propoxy, Isopropoxy, Butoxy oder lsobutoxy, insbesondere Methoxy, in Betracht.

Als C₂-C₄-Alkanoylamino kommt für R₅ insbesondere Acetylamino oder Propionylamino, vorzugsweise Acetylamino, in Betracht.

Als Halogen kommt für R₅ z.B. Fluor, Chlor oder Brom, insbesondere Chlor, in Betracht.

Als gegebenenfalls weitere Heteroatome enthaltender Ring kommt für den Rest der Formel -N(R₂)-X₁ z.B. Morpholino in Betracht.

Als C₅-C₇-Cycloalkyl kommt für X₁ und R₄ insbesondere der Cyclohexylrest in Betracht. Die genannten Cycloalkylreste können unsubstituiert oder z.B. durch C₁-C₄-Alkyl, insbesondere durch Methyl, substituiert sein.

Als Phenyl oder Naphthyl kommen für X₁ und R₄ neben den entsprechenden unsubstituierten Resten die beispielsweise durch C₁-C₄-Alkyl, C₁-C₄-Alkoxy, C₂-C₄-Alkanoylamino, Amino, Hydroxy, Ureido, Halogen, Carboxy oder Sulfo substituierten Reste in Betracht.

Als farbloses organisches Brückenglied kommt für B₁ z.B. gegebenenfalls substituiertes C₁-C₁₂-Alkylen, welches durch 1, 2 oder 3 Glieder aus der Gruppe -NH-, -N(CH₃)- oder -O- unterbrochen sein kann, oder gegebenenfalls substituiertes C₅-C₇-Cycloalkylen, Phenylen oder Naphthylen in Betracht. Als C₅-C₇-Cycloalkylen kommt hierbei insbesondere Cyclohexylen in Betracht, welches unsubstituiert oder z.B. durch C₁-C₄-Alkyl, insbesondere durch Methyl, substituiert sein kann. Als Substituenten der genannten Phenylen- und Napthylenreste kommen hierbei z.B. C₁-C₄-Alkyl, C₁-C₄-Alkoxy, C₂-C₄-Alkanoylamino, Amino, Hydroxy, Ureido, Halogen, Carboxy oder Sulfo, insbesondere C₁-C₄-Alkyl, C₁-C₄-Alkoxy, Halogen oder Sulfo, in Betracht. Als Substituenten der genannten C₁-C₁₂- Alkylenreste kommen z.B. Hydroxy, Sulfo, Sulfato, Cyano oder Carboxy in Betracht. Vorzugsweise sind die C₁-C₁₂-Alkylenreste unsubstituiert.

R₁ und R₂ sind bevorzugt unabhängig voneinander Wasserstoff oder C₁-C₄-Alkyl. R₁ ist besonders bevorzugt Wasserstoff, Methyl oder Aethyl, insbesondere Wasserstoff. R₂ ist besonders bevorzugt C₁-C₄-Alkyl, insbesondere Methyl oder Aethyl und vorzugsweise Aethyl.

(R₅)₀₋₃ steht bevorzugt für 0 bis 3 gleiche oder voneinander verschiedene Substituenten ausgewählt aus der Gruppe C₁-C₄-Alkyl, C₁-C₄-Alkoxy, Halogen und Sulfo. Besonders bevorzugt enthalten die Reste der Formel (3) nur einen Substituenten R₅, welcher Wasserstoff oder Sulfo, insbesondere Sulfo, ist.

X₁ ist bevorzugt C₁-C₈-Alkyl, gegebenenfalls durch C₁-C₄-Alkyl substituiertes C₅-C₇-Cycloalkyl oder gegebenenfalls durch C₁-C₄-Alkyl, C₁-C₄-Alkoxy, C₂-C₄-Alkanoylamino, Ureido, Halogen, Carboxy oder Sulfo substituiertes Phenyl oder Naphthyl. Besonders bevorzugt ist hierbei der Phenylrest, welcher wie oben angegeben substituiert sein kann. Ganz besonders bevorzugt ist X₁ gegebenenfalls durch C₁-C₄-Alkyl, C₁-C₄-Alkoxy, Halogen oder Sulfo substituiertes Phenyl, vorzugsweise unsubstituiertes Phenyl. R₂ ist hierbei besonders bevorzugt C₁-C₄-Alkyl, insbesondere Methyl oder Aethyl und vorzugsweise Aethyl.

B₁ ist bevorzugt ein C₁-C₁₂-Alkylenrest, insbesondere ein C₁-C₁₀-Alkylenrest, welcher durch 1, 2 oder 3 Glieder aus der Gruppe -NH-, -N(CH₃)- oder insbesondere -O- unterbrochen sein kann und unsubstituiert oder durch Hydroxy, Sulfo, Sulfato, Cyano oder Carboxy substituiert ist. Von besonderem Interesse sind hierbei die entsprechenden unsubstituierten Alkylenreste.

Besonders bevorzugt ist B₁ ein C₁-C₁₀-Alkylenrest, insbesondere ein C₁-C₆-Alkylenrest und vorzugsweise ein C₁-C₄-Alkylenrest. Besonders interessante Reste B₁ sind solche der Formeln -CH₂-, -CH₂CH₂- und -CH₂CH₂CH₂-.

R₃ ist bevorzugt Wasserstoff oder C₁-C₄-Alkyl, insbesondere Wasserstoff.

R₄ ist bevorzugt Wasserstoff oder gegebenenfalls durch Hydroxy, Sulfo, Sulfato, Cyano oder Carboxy substituiertes C₁-C₈-Alkyl, vorzugsweise Wasserstoff oder C₁-C₄-Alkyl und insbesondere Wasserstoff.

Vorzugsweise sind R₃ und R₄ unabhängig voneinander Wasserstoff oder C₁-C₄-Alkyl und B₁ ist ein C₁-C₁₀-Alkylenrest.

Bei dem Rest Y₁ handelt es sich bevorzugt um einen Rest der Formel (2a) oder (2b), insbesondere um einen Rest der Formel (2a).

Bei dem Rest der Formel (3) handelt es sich bevorzugt um einen Rest der Formel 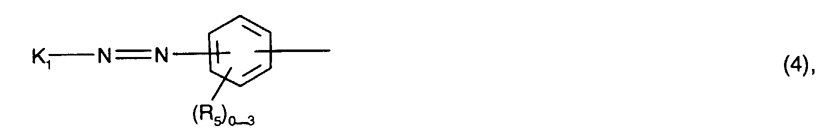 wobei für K₁ und (R₅)₀₋₃ die oben angegebenen Bedeutungen und Bevorzugungen gelten.

Der Rest K₁ ist bevorzugt ein Benzol-, Naphthalin-, 6-Hydroxypyrid-(2)-on-, 1-Phenyl-5-aminopyrazol-, 1-Phenylpyrazol-(5)-on- oder Indolrest, insbesondere ein Benzol-, Naphthalin-, 1-Phenyl-5-aminopyrazol- oder 1-Phenylpyrazol-(5)-onrest und vorzugsweise ein Naphthalin-, 1-Phenyl-5-aminopyrazol- oder 1-Phenylpyrazol-(5)-onrest.

Als Beispiele für Substituenten des Restes K₁ seien die folgenden genannt: C₁-C₈-Alkyl, insbesondere C₁-C₄-Alkyl, wie Methyl, Aethyl, Propyl, Isopropyl, Butyl, Isobutyl, sek.-Butyl oder tert.-Butyl; C₁-C₈-Alkoxy, insbesondere C₁-C₄-Alkoxy, wie Methoxy, Aethoxy, Propoxy, lsopropoxy, Butoxy, lsobutoxy, sek.-Butoxy oder tert.-Butoxy; C₂-C₆-Alkanoylamino, insbesondere C₂-C₄-Alkanoylamino, wie z.B. Propionylamino oder insbesondere Acetylamino; Halogen, wie z.B. Fluor oder insbesondere Chlor; Hydroxyl; Cyano; Carbamoyl; Carboxyl; Sulfo; Phenyl; Amino; N-Mono- oder N,N-Di-C₁-C₄-Alkylamino. Hierbei können die genannten Phenylreste unsubstituiert oder z.B. durch C₁-C₄-Alkyl, C₁-C₄-Alkoxy, C₂-C₄-Alkanoylamino, Ureido, Halogen, Carboxyl oder Sulfo substituiert sein.

Besonders bevorzugt ist K₁ ein Rest der Formel 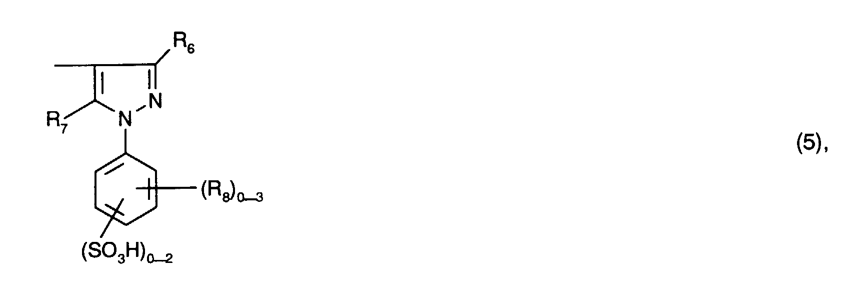
worin R₆ Methyl oder Carboxyl,
R₇ Amino oder Hydroxyl ist und
(R₈)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanyolamino, Ureido, Halogen, Carboxyl und
Sulfo steht, oder
K₁ ist ein Rest der Formel 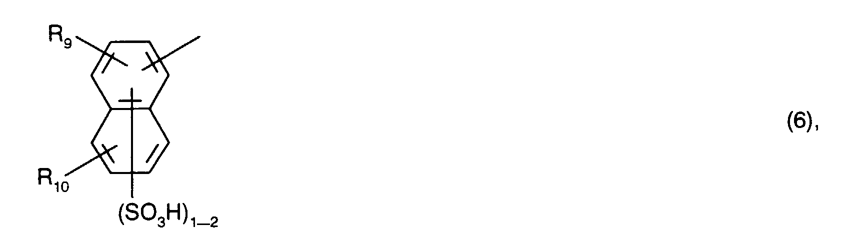 worin R₉ Wasserstoff, Amino oder N-Mono- oder N,N-Di-C₁-C₄-Alkylamino und R₁₀ Wasserstoff oder Hydroxyl ist.

R₆ ist bevorzugt Methyl.

(R₈)₀₋₃ steht bevorzugt für 0 bis 3 gleiche oder voneinander verschiedene Substituenten ausgewählt aus der Gruppe C₁-C₄-Alkyl, C₁-C₄-Alkoxy, Halogen und Sulfo.

R₉ ist bevorzugt Amino oder N-Mono- oder N,N-Di-C₁-C₄-Alkylamino, insbesondere Amino.

R₁₀ ist bevorzugt Wasserstoff.

Die Reste der Formel (6) enthalten vorzugsweise nur eine Sulfogruppe.

Als Reste K₁ der Formel (6) sind solche der Formel 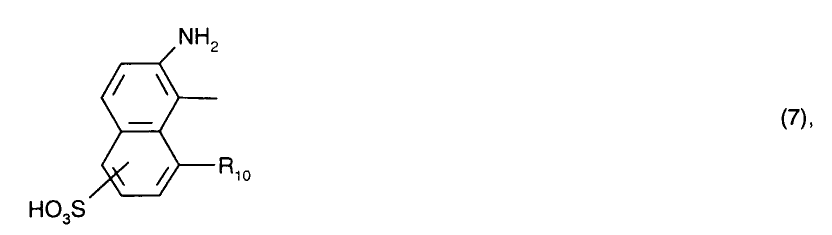 worin R₁₀ Wasserstoff oder Hydroxyl, insbesondere Wasserstoff, bedeutet, bevorzugt.

Der Rest A₁ im Farbstoff der Formel (1) kann als Rest eines Polyazo-, Metallkomplexazo-, Anthrachinon-, Formazan-, Phthalocyanin- oder Dioxazinfarbstoffes an seinem Grundgerüst die bei organischen Farbstoffen üblichen Substituenten gebunden enthalten.

Als Beispiele für Substituenten im Rest A₁ seien genannt: Alkylgruppen mit 1 bis 4 Kohlenstoffatomen, wie Methyl, Aethyl, Propyl, Isopropyl oder Butyl, wobei die Alkylreste z.B. durch Hydroxyl, Sulfo oder Sulfato weitersubstituiert sein können; Alkoxygruppen mit 1 bis 4 Kohlenstoffatomen, wie Methoxy, Aethoxy, Propoxy, lsopropoxy oder Butoxy, wobei die Alkylreste z.B. durch Hydroxyl, Sulfo oder Sulfato weitersubstituiert sein können; gegebenenfalls durch C₁-C₄-Alkyl, C₁-C₄-Alkoxy, Halogen, Carboxy oder Sulfo substituiertes Phenyl; Acylaminogruppen mit 1 bis 8 Kohlenstoffatomen, insbesondere solche Alkanoylaminogruppen, wie z.B. Acetylamino oder Propionylamino; gegebenenfalls im Phenylring durch C₁-C₄-Alkyl, C₁-C₄-Alkoxy, Halogen oder Sulfo substituiertes Benzoylamino; gegebenenfalls im Phenylring durch C₁-C₄-Alkyl, C₁-C₄-Alkoxy, Halogen oder Sulfo substituiertes Phenylamino; N,N-Di-β-hydroxyäthylamino; N,N-Di-β-sulfatoäthylamino; Alkylsulfonyl mit 1 bis 4 Kohlenstoffatomen, wie Methylsulfonyl oder Aethylsulfonyl; Trifluormethyl; Nitro; Amino; Cyano; Halogen, wie Fluor, Chlor oder Brom; Carbamoyl; Sulfamoyl; N-Mono- oder N,N-Dialkylsulfamoyl mit jeweils 1 bis 4 Kohlenstoffatomen; gegebenenfalls durch C₁-C₄-Alkyl, C₁-C₄-Alkoxy, Halogen, Carboxy oder Sulfo substituiertes N-Phenylsulfamoyl; Ureido; Hydroxy; Carboxy; Sulfomethyl oder Sulfo.

Für A₁ als Rest eines Polyazofarbstoffes kommen insbesondere Reste eines Disazofarbstoffes, vorzugsweise Reste der Formel 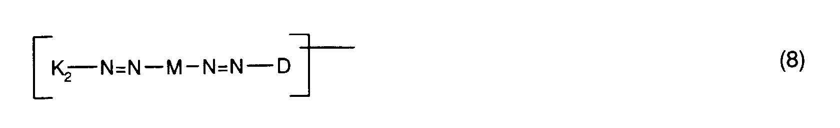 in Betracht, worin D ein Rest der Benzol- oder Naphthalinreihe, M der Rest einer Mittelkomponente der Benzol- oder Naphthalinreihe und K₂ ein Rest der Benzol- oder Naphthalinreihe oder ein heterocyclischer Rest ist.

Für den Rest K₂ gelten hierbei die oben für K₁ angegebenen Bedeutungen und Bevorzugungen.

Als Beispiele für Substituenten der Reste D und M seien die folgenden genannt: C₁-C₈-Alkyl, insbesondere C₁-C₄-Alkyl, wie Methyl, Aethyl, Propyl, Isopropyl, Butyl, Isobutyl, sek.-Butyl oder tert.-Butyl; C₁-C₈-Alkoxy, insbesondere C₁-C₄-Alkoxy, wie Methoxy, Aethoxy, Propoxy, lsopropoxy, Butoxy, Isobutoxy, sek.-Butoxy oder tert.-Butoxy; C₂-C₆-Alkanoylamino, insbesondere C₂-C₄-Alkanoylamino, wie z.B. Propionylamino oder insbesondere Acetylamino; Halogen, wie z.B. Fluor oder insbesondere Chlor; Hydroxyl; Cyano; Carbamoyl; Carboxyl; Sulfo; Phenyl; Amino; N-Mono- oder N,N-Di-C₁-C₄-Alkylamino. Hierbei können die genannten Phenylreste unsubstituiert oder z.B. durch C₁-C₄-Alkyl, C₁-C₄-Alkoxy, C₂-C₄-Alkanoylamino, Ureido, Halogen, Carboxyl oder Sulfo substituiert sein.

Bevorzugte Substituenten der Reste D und M sind C₁-C₄-Alkyl, C₁-C₄-Alkoxy, C₂-C₄-Alkanoylamino, Halogen, Hydroxyl, Cyano, Carbamoyl, Carboxyl, Sulfo, Amino oder N-Mono- oder N,N-Di-C₁-C₄-Alkylamino. Besonders bevorzugte Substituenten der Reste D um M sind C₁-C₄-Alkyl, C₁-C₄-Alkoxy, C₂-C₄-Alkanoylamino, Halogen, Hydroxyl, Sulfo, Amino oder N-Mono- oder N,N-Di-C₁-C₄-Alkylamino.

Besonders bevorzugt sind für A₁ als Rest eines Diszazofarbstoffes Reste der Formel 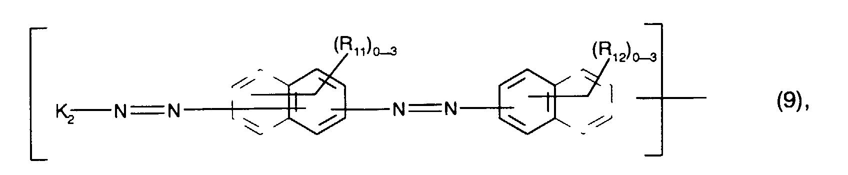 worin
für K₂ die oben angegebenen Bedeutungen und Bevorzugungen gelten und (R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen. Bevorzugt stehen (R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Sulfo, Amino oder N-Mono- oder N,N-Di-C₁-C₄-Alkylamino. Ganz besonders bevorzugt stehen (R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Sulfo und Amino.

Ganz besonders bevorzugt sind für A₁ als Rest eines Diszazofarbstoffes Reste der Formel 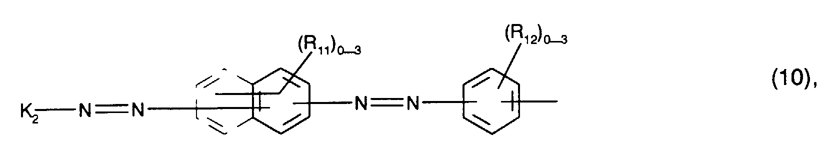 worin
für K₂, (R₁₁)₀₋₃ und (R₁₂)₀₋₃ die oben angegebenen Bedeutungen und Bevorzugungen gelten.

Für A₁ als Rest eines Anthrachinonfarbstoffs kommen insbesondere solche der Formel 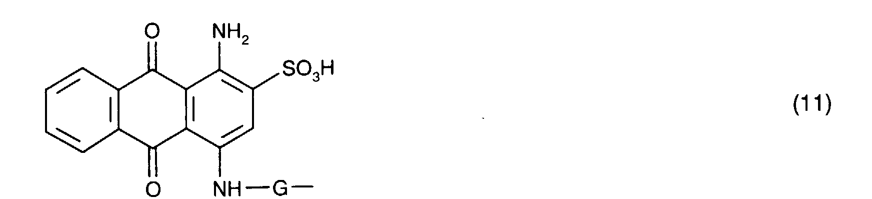 in Betracht, worin G einen unsubstituierten oder durch C₁-C₄-Alkyl, C₁-C₄-Alkoxy, Halogen, Carboxy oder Sulfo substituierten Phenylenrest oder einen Cyclohexylen-,
Phenylenmethylen- oder C₂-C₆-Alkylenrest bedeutet.

Bevorzugt ist G ein unsubstituierter oder durch C₁-C₄-Alkyl, C₁-C₄-Alkoxy, Halogen, Carboxy oder Sulfo, insbesondere durch C₁-C₄-Alkyl oder Sulfo, substituierter Phenylenrest.

Von besonderer Bedeutung für A₁ als Rest eines Anthrachinonfarbstoffs sind solche der Formel 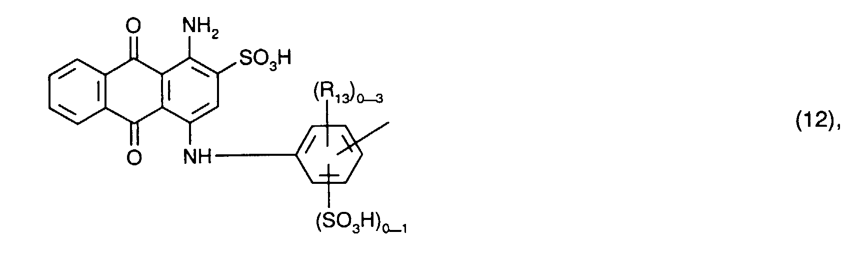 worin (R₁₃)₀₋₃ für 0 bis 3 gleiche oder voneinander verschiedene Substituenten ausgewählt aus der Gruppe C₁-C₄-Alkyl, C₁-C₄-Alkoxy, Halogen, Carboxy und Sulfo steht. Besonders bevorzugt ist hierbei R₁₃ C₁-C₄-Alkyl, insbesondere Methyl. Vorzugsweise enthält der Rest der Formel (12) zwei Sulfogruppen.

Bei dem Rest A₁ handelt es sich vorzugsweise um einen Rest der Formel (3) oder um den Rest eines Disazo- oder Anthrachinonfarbstoffes, wobei für diese genannten Reste die oben angegebenen Bedeutungen und Bevorzugungen gelten.

Bevorzugt sind Farbstoffe der Formel (1), worin A₁ ein Rest der Formel (3), (9) oder (11) ist. K₁ und K₂ sind hierbei vorzugsweise Reste der Formel (5) oder (6), insbesondere Reste der Formel (5) oder (7). Für die Reste R₁, R₂, X₁ und Y₁ gelten hierbei die oben angegebenen Bedeutungen und Bevorzugungen.

Besonders bevorzugt sind Farbstoffe der Formel (1), worin A₁ ein Rest der Formel (4), (9) oder (11) ist. K₁ und K₂ sind hierbei vorzugsweise Reste der Formel (5) oder (6), insbesondere Reste der Formel (5) oder (7). Für die Reste R₁, R₂, X₁ und Y₁ gelten hierbei die oben angegebenen Bedeutungen und Bevorzugungen.

Ganz besonders bevorzugt sind Farbstoffe der Formel (1), worin A₁ ein Rest der Formel (4), (10) oder (12) ist. K₁ und K₂ sind hierbei vorzugsweise Reste der Formel (5) oder (6), insbesondere Reste der Formel (5) oder (7). Für die Reste R₁, R₂, X₁ und Y₁ gelten hierbei die oben angegebenen Bedeutungen und Bevorzugungen.

Die Farbstoffe der Formel (1) können z.B. erhalten werden, indem man Cyanurhalogenid, insbesondere Cyanurfluorid oder vorzugsweise Cyanurchlorid, mit einer Verbindung der Formel

A₁-NHR₁ (13),

einer Verbindung der Formel

X₁-NHR₂ (14)

und einer Verbindung der Formel

Y₁-H (15)

umsetzt, wobei A₁, X₁, Y₁, R₁ und R₂ die unter Formel (1) angegebenen Bedeutungen haben.

Vorzugsweise setzt man Cyanurhalogenid zunächst mit in etwa stöchiometrischen Mengen einer Verbindung der Formel (13) bei einer Temperatur von -5 bis 20°C, vorzugsweise 0 bis 5°C um, wobei der pH-Wert durch Zugabe geeigneter Basen, z.B. Alkalimetallbasen wie Lithium-, Natrium- oder Kaliumhydroxid oder -carbonat, neutral bis sauer, vorzugsweise bei 2 bis 7, insbesondere 2 bis 4, gehalten wird. Zu dem erhaltenen Reaktionsgemisch werden zweckmässigerweise in etwa stöchiometrische Mengen einer Verbindung der Formel (14) gegeben und diese bei leicht erhöhter Temperatur, vorzugsweise bei 10 bis 60°C, insbesondere 15 bis 30°C, und einem neutralen bis leicht sauren pH-Wert, der vorzugsweise 6 bis 7 beträgt, mit dem Triazinderivat zur Reaktion gebracht.

Eine weitere Möglichkeit besteht darin, Cyanurhalogenid zunächst mit einem Vorprodukt der Verbindung der Formel (13), wie z.B. einer Diazokomponente im Falle von Azofarbstoffresten, umzusetzen und dann, beispielsweise durch Diazotierung und Kupplung, zum entsprechenden Farbstoffrest A₁ umzusetzen. Diese Umsetzung zum Farbstoffrest kann z.B. vorzugsweise direkt im Anschluss an die Umsetzung von Cyanurhalogenid mit dem Vorprodukt erfolgen, oder aber auch im weiteren Verlauf der Synthese des Farbstoffs der Formel (1).

Die gemäss den oben beschriebenen Verfahren erhältlichen Triazinylverbindungen enthalten noch ein Halogenatom, welches durch Reaktion mit einer Verbindung der Formel (15) bei erhöhter Temperatur, vorzugsweise 20 bis 70°C, und einem neutralen bis leicht alkalischen pH-Wert, der je nach eingesetzter Verbindung der Formel (15) z.B. 7 bis 9 beträgt, in eine Gruppe Y₁ umgewandelt werden kann. Vorteilhafterweise setzt man einen Ueberschuss der Verbindung der Formel (15) ein.

Die in den obigen Verfahren eingesetzten Verbindungen sind bekannt oder können in Analogie zu bekannten Verbindungen erhalten werden.

Die Farbstoffe der Formel (1) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Bedeutung Sulfo umfasst generell die freie Säureform (-SO₃H) als auch die Salzform. Bei den Farbstoffen der Formel (1) handelt es sich um anionische Säurefarbstoffe. In den Farbstoffen der Formel (1) ist die Zahl der anionischen Gruppen, insbesondere die Zahl der Sulfogruppen, grösser oder gleich der Zahl der kationischen Gruppen. Vorzugsweise ist die Zahl der anionischen Gruppen grösser als die Zahl der kationischen Gruppen. Unter kationischen Gruppen sind solche zu verstehen, welche unter den üblichen Färbebedingungen eine kationische Ladung tragen. Als Beispiele seien aliphatisch gebundene Aminoreste genannt. Die im Triazinring vorhandenen sowie die an den Triazinrest gebundenen Stickstoffatome tragen keine kationische Ladung. Die Gesamtzahl der Sulfo- und Sulfatogruppen der Farbstoffe der Formel (1) ist vorzugsweise grösser als eins. Bevorzugt ist die Gesamtzahl der Sulfo- und Sulfatogruppen der Farbstoffe der Formel (1) zwei bis vier, insbesondere zwei oder drei und vorzugsweise zwei.

Als farblose, sulfo- oder sulfatogruppenhaltige, mindestens zwei faserreaktive Gruppen enthaltende Fixiermittel verwendet man bevorzugt solche, worin die Gesamtzahl der Sulfo- und Sulfatogruppen 1 bis 4, insbesondere 2 bis 4, ist.

Die Gesamtzahl der faserreaktiven Gruppen ist bevorzugt 2 bis 6, insbesondere 2 oder 3. Besonders bevorzugte faserreaktive Gruppen sind solche der nachstehenden Formeln (18) und (20a) bis (20f).

Bevorzugte Fixiermittel sind solche der Formel 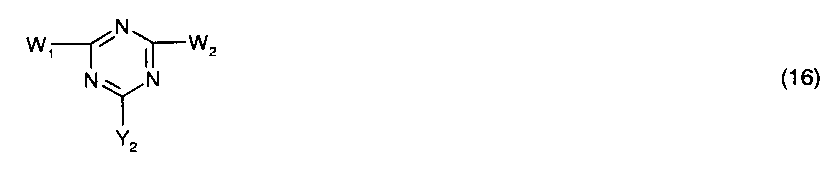 oder 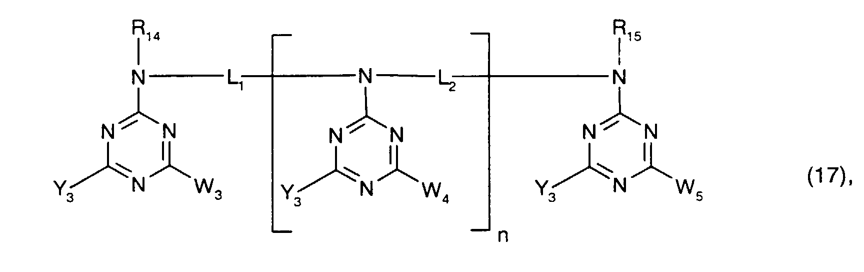 worin
R₁₄ und R₁₅ unabhängig voneinander Wasserstoff oder gegebenenfalls substituiertes C₁-C₄-Alkyl sind,
Y₂ und Y₃ unabhängig voneinander Fluor, Chlor, Amino, gegebenenfalls im Alkylteil substituiertes N-Mono- oder N,N-Di-C₁-C₄-Alkylamino, gegebenenfalls im Cycloalkylring substituiertes C₅-C₇-Cycloalkylamino, gegebenenfalls im Phenylring substituiertes Phenylamino oder N-C₁-C₄-Alkyl-N-phenylamino oder gegebenenfalls weitere Heteroatome enthaltende N-Heterocyclen sind,
L₁ und L₂ ein farbloses, organisches Brückenglied sind,
n die Zahl 0 oder 1 ist,
W₁, W₂, W₃, W₄ und W₅ unabhängig voneinander einen Rest der Formel

   -NH-(CH₂)₂₋₃-O-(CH₂)₂₋₃-SO₂Z (18)

   oder 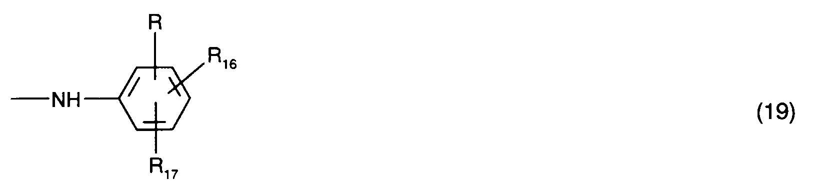
bedeuten, wobei
R₁₆ und R₁₇ unabhängig voneinander Wasserstoff, C₁-C₄-Alkyl, C₁-C₄-Alkoxy, C₂-C₄-Alkanoylamino, Ureido, Halogen, Carboxyl oder Sulfo sind,
Z ein Rest der Formel -CH₂CH₂-U oder -CH=CH₂ und U eine Abgangsgruppe ist, und
R ein Rest der Formel

   -SO₂Z (20a),

   -CONH-(CH₂)₂₋₃-SO₂Z (20b),

   -NH-CO-CH(Hal)-CH₂-Hal (20c),

   -NH-CO-C(Hal)=CH₂ (20d),

   -NH-CO-CH=CH₂ (20e)

   oder

   -NH-CO-CH₂-Cl (20f)

   ist und Hal Halogen bedeutet und Z die oben angegebenen Bedeutungen hat.

Als C₁-C₄-Alkyl kommen für R₁₄ und R₁₅ unabhängig voneinander z.B. Methyl, Aethyl, Propyl, Isopropyl, Butyl, sek.-Butyl, tert.-Butyl oder Isobutyl in Betracht. Die genannten Alkylreste können unsubstituiert oder z.B. durch Hydroxy, Sulfo, Sulfato, Cyano oder Carboxy substituiert sein. Bevorzugt als Alkylreste sind die entsprechenden unsubstituierten Reste.

Bevorzugt sind R₁₄ und R₁₅ Wasserstoff oder C₁-C₄-Alkyl, insbesondere Wasserstoff.

R₁₆ und R₁₇ sind bevorzugt Wasserstoff, C₁-C₄-Alkyl, C₁-C₄-Alkoxy, C₂-C₄-Alkanoylamino, Ureido, Halogen oder Sulfo, insbesondere Wasserstoff, C₁-C₄-Alkyl, C₁-C₄-Alkoxy, Halogen oder Sulfo und vorzugsweise Wasserstoff, C₁-C₄-Alkyl, C₁-C₄-Alkoxy oder Sulfo. Besonders bevorzugt ist R₁₆ Wasserstoff und R₁₇ Wasserstoff oder Sulfo.

Y₂ und Y₃ als N-Mono- oder N,N-Di-C₁-C₄-Alkylamino kann sowohl die unsubstituierten wie auch die im Alkylteil z.B. durch C₁-C₄-Alkyl, C₁-C₄-Alkoxy, Hydroxy, Sulfo oder Sulfato substituierten Reste umfassen. Bevorzugt sind die im Alkylteil unsubstituierten Reste.

Y₂ und Y₃ als C₅-C₇-Cycloalkylamino kann sowohl die unsubstituierten wie auch die im Cycloalkylring z.B. durch C₁-C₄-Alkyl substituierten Reste umfassen ist. Bevorzugt als solche Reste sind die entsprechenden Cyclohexylreste.

Y₂ und Y₃ als Phenylamino oder N-C₁-C₄-Alkyl-N-phenylamino kann sowohl die unsubstituierten wie auch die im Phenylring z.B. durch C₁-C₄-Alkyl, C₁-C₄-Alkoxy, Halogen, Carboxy oder Sulfo substituierten Reste umfassen. Bevorzugt sind diese Reste im Phenylring unsubstituiert.

Als gegebenenfalls weitere Heteroatome enthaltende N-Heterocyclen kommen für Y₂ und Y₃ z.B. Morpholino oder Piperidin-1-yl in Betracht.

Vorzugsweise sind Y₂ und Y₃ Chlor oder Fluor, insbesondere Chlor.

n ist bevorzugt die Zahl 0.

Bei der Abgangsgruppe U handelt es sich z.B. um -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂. Bevorzugt ist U eine Gruppe der Formel -Cl, -OSO₃H oder -OCO-CH₃ und besonders bevorzugt -Cl oder -OSO₃H. Ganz besonders bevorzugt ist U eine Gruppe der Formel -OSO₃H.

Bei dem Rest Z handelt es sich bevorzugt um einen Rest der Formel -CH₂CH₂OSO₃H, -CH₂CH₂Cl oder -CH=CH₂, insbesondere um einen Rest der Formel -CH₂CH₂OSO₃H oder -CH₂CH₂Cl.

Als Rest der Formel (18) kommt insbesondere ein Rest der Formel -NH-(CH₂)₂-O-(CH₂)₂-SO₂Z in Betracht, wobei für Z die oben angegebenen Bedeutungen und Bevorzugungen gelten.

Hal bedeutet vorzugsweise Brom oder Chlor, insbesondere Brom.

R ist bevorzugt ein Rest der Formel (20a), (20c) oder (20d), insbesondere ein Rest der Formel (20a) oder (20c) und vorzugsweise ein Rest der Formel (20a).

L₁ und L₂ sind vorzugsweise farblose, aliphatische oder aromatische Brückenglieder.

Als aliphatisches Brückenglied sind L₁ und L₂ z.B. C₂-C₁₂-Alkylenreste, insbesondere C₂-C₆-Alkylenreste, welche durch 1, 2 oder 3 Glieder aus der Gruppe -NH-, -N(CH₃)- oder insbesondere -O- unterbrochen sein können und unsubstituiert oder durch Hydroxy, Sulfo, Sulfato, Cyano oder Carboxy substituiert sind. Als Substituenten der für L₁ und L₂ genannten Alkylenreste sind Hydroxy, Sulfo oder Sulfato, insbesondere Hydroxy, bevorzugt. Vorzugsweise sind die genannten Alkylenreste unsubstituiert. Von besonderer Bedeutung sind C₂-C₄-Alkylenreste, insbesondere der Rest der Formel -CH₂CH₂-.

Als aliphatische Brückenglieder sind L₁ und L₂ z.B. weiterhin C₅-C₉-Cycloalkylenreste, wie insbesondere Cyclohexylenreste. Die genannten Cycloalkylenreste können gegebenenfalls durch C₁-C₄-Alkyl, C₁-C₄-Alkoxy, C₂-C₄-Alkanoylamino, Sulfo, Halogen oder Carboxy, insbesondere durch C₁-C₄-Alkyl, substituiert sein. Als aliphatische Brückenglieder seien für L₁ und L₂ ferner gegebenenfalls im Cyclohexylenring durch C₁-C₄-Alkyl substituierte Methylen-cyclohexylen- oder Methylen-cyclohexylen-methylenreste genannt.

Als aromatisches Brückenglied sind L₁ und L₂ z.B. gegebenenfalls durch C₁-C₄-Alkyl, C₁-C₄-Alkoxy, C₂-C₄-Alkanoylamino, Sulfo, Halogen oder Carboxy substituiertes C₁-C₆-Alkylenphenylen oder insbesondere Phenylen. Bevorzugt ist hierbei gegebenenfalls durch C₁-C₄-Alkyl, C₁-C₄-Alkoxy, Halogen oder Sulfo, insbesondere Sulfo, substituiertes Phenylen.

Weiterhin kommen für L₁ und L₂ als aromatisches Brückenglied z.B. Reste der Formel 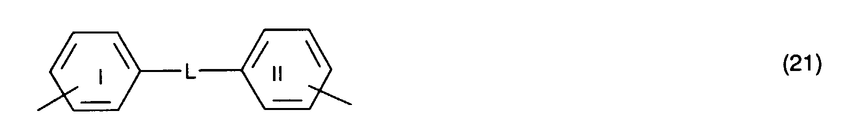 in Betracht, worin
die Benzolringe I und ll gegebenenfalls durch C₁-C₄-Alkyl, C₁-C₄-Alkoxy, C₂-C₄-Alkanoylamino, Sulfo, Halogen oder Carboxy, substituiert sind und
L die direkte Bindung oder ein C₂-C₁₀-Alkylenrest, welcher durch 1, 2 oder 3 Sauerstoffatome unterbrochen sein kann, insbesondere ein C₂-C₄-Alkylenrest, ist, oder L ein Brückenglied der Formel -CH=CH-, -NH-, -CO-, -NH-CO-, -CO-NH-, -NH-CO-NH-, -NH-CO-CO-NH-, -O-, -S- oder -SO₂- ist, oder
L ein Brückenglied der Formel 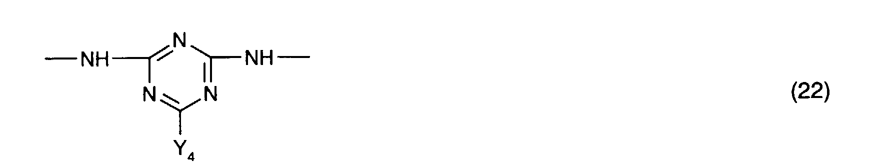 ist, wobei für Y₄ die oben für Y₂ angegebenen Bedeutungen und Bevorzugungen gelten.

Die Benzolringe I und ll der obigen Formel (21) sind vorzugsweise unsubstituiert oder ein- oder zweifach substituiert. Als Substituenten sind C₁-C₄-Alkyl, C₁-C₄-Alkoxy, Halogen oder Sulfo, insbesondere Sulfo, bevorzugt. Besonders bevorzugt sind die Benzolringe l und ll der obigen Formel (21) unsubstituiert oder einfach durch Sulfo substituiert.

L ist bevorzugt die direkte Bindung oder
ein Brückenglied der Formel -CH=CH-, -NH-, -CO-, -NH-CO-, -CO-NH-, -NH-CO-NH-, -NH-CO-CO-NH- oder ein Brückenglied der Formel (22), vorzugsweise ein Brückenglied der Formel -CH=CH-, -NH-CO- oder -CO-NH- und insbesondere ein Brückenglied der Formel -CH=CH- oder -NH-CO-.

Bevorzugt sind Brückenglieder der Formel (21), worin
die Benzolringe l und ll unsubstituiert oder ein- oder zweifach durch C₁-C₄-Alkyl, C₁-C₄-Alkoxy, Halogen oder Sulfo, insbesondere Sulfo, substituiert sind und
L die direkte Bindung oder
ein Brückenglied der Formel -CH=CH-, -NH-, -CO-, -NH-CO-, -CO-NH-, -NH-CO-NH-, -NH-CO-CO-NH- oder ein Brückenglied der Formel (22), vorzugsweise ein Brückenglied der Formel -CH=CH-, -NH-CO- oder -CO-NH- und insbesondere ein Brückenglied der Formel -CH=CH- oder -NH-CO- ist.

Ferner kommen für L₁ und L₂ als aromatisches Brückenglied z.B. Reste der Formel 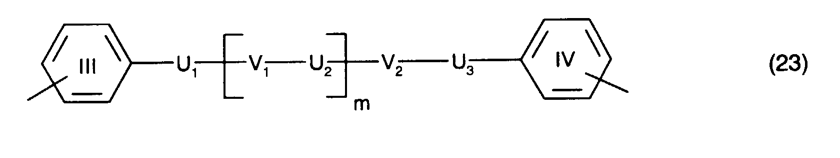
in Betracht, worin
die Benzolringe lll und IV gegebenenfalls durch C₁-C₄-Alkyl, C₁-C₄-Alkoxy, C₂-C₄-Alkanoylamino, Sulfo, Halogen oder Carboxy substituiert sind,
m eine Zahl von 0 bis 5 ist,
U₁, U₂ und U₃ unabhängig voneinander Reste der Formel -NH-CO-, -CO-NH-, -NH-CO-NH-, -NH-CO-CO-NH- oder der obigen Formel (22) sind, und
V₁ und V₂ unabhängig voneinander Reste der Formel 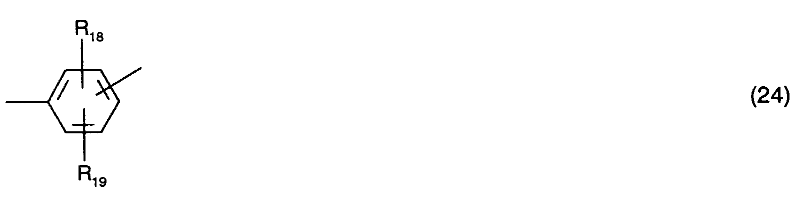 oder 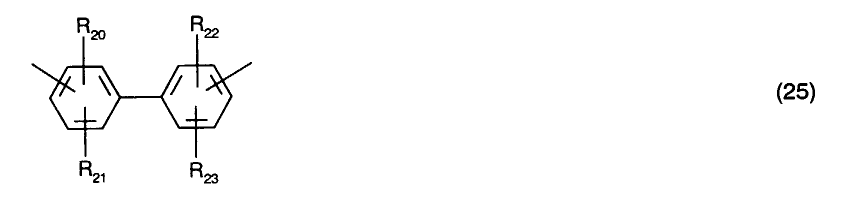 sind, wobei R₁₈, R₁₉, R₂₀, R₂₁, R₂₂ und R₂₃ unabhängig voneinander Wasserstoff, C₁-C₄-Alkyl, C₁-C₄-Alkoxy, C₂-C₄-Alkanoylamino, Sulfo, Halogen oder Carboxy bedeuten.

Y₄ bedeutet bevorzugt Chlor.

Die Benzolringe lll und IV der obigen Formel (23) sind vorzugsweise unsubstituiert oder ein- oder zweifach substituiert. Als Substituenten sind C₁-C₄-Alkyl, C₁-C₄-Alkoxy, Halogen oder Sulfo, insbesondere Sulfo, bevorzugt. Besonders bevorzugt sind die Benzolringe lll und IV der obigen Formel (23) unsubstituiert oder einfach durch Sulfo substituiert.

R₁₈, R₁₉, R₂₀, R₂₁, R₂₂ und R₂₃ sind bevorzugt unabhängig voneinander Wasserstoff, C₁-C₄-Alkyl, C₁-C₄-Alkoxy, Halogen oder Sulfo, insbesondere Wasserstoff oder Sulfo.

Bevorzugt sind U₁, U₂ und U₃ unabhängig voneinander Reste der Formel -NH-CO-, -CO-NH-, -NH-CO-CO-NH- oder der obigen Formel (22), insbesondere Reste der Formel -NH-CO-, -CO-NH- oder -NH-CO-CO-NH- und vorzugsweise Reste der Formel -NH-CO- oder -CO-NH-.

Als Reste U₁, U₂ und U₃ der obigen Formel (22) sind solche bevorzugt, worin Y₄ Chlor ist.

m ist bevorzugt die Zahl 0, 1 oder 2, insbesondere die Zahl 0 oder 1 und vorzugsweise die Zahl 0.

Für V₁ und V₂ sind Reste der Formel (24) bevorzugt.

Bevorzugt sind Brückenglieder der Formel (23), worin
die Benzolringe lll und IV unsubstituiert oder ein- oder zweifach durch C₁-C₄-Alkyl, C₁-C₄-Alkoxy, Halogen oder Sulfo, insbesondere Sulfo, substituiert sind,
R₁₈, R₁₉, R₂₀, R₂₁, R₂₂ und R₂₃ unabhängig voneinander Wasserstoff, C₁-C₄-Alkyl, C₁-C₄-Alkoxy, Halogen oder Sulfo, insbesondere Wasserstoff oder Sulfo, sind,
U₁, U₂ und U₃ unabhängig voneinander Reste der Formel -NH-CO-, -CO-NH-, -NH-CO-CO-NH- oder der obigen Formel (22), insbesondere Reste der Formel -NH-CO-, -CO-NH- oder -NH-CO-CO-NH- und vorzugsweise Reste der Formel -NH-CO- oder -CO-NH-, sind und
m die Zahl 0 oder 1, insbesondere die Zahl 0, ist.

Die Brückenglieder L₁ und L₂ sind bevorzugt
a) C₂-C₁₂-Alkylenreste, insbesondere C₂-C₆-Alkylenreste, welche durch 1, 2 oder 3 Glieder aus der Gruppe -NH-, -N(CH₃)- oder insbesondere -O- unterbrochen sein können, oder
b) gegebenenfalls im Cyclohexylenring durch C₁-C₄-Alkyl substituierte Cyclohexylen-, Methylen-cyclohexylen- oder Methylen-cyclohexylen-methylenreste, oder
c) gegebenenfalls durch C₁-C₄-Alkyl, C₁-C₄-Alkoxy, C₂-C₄-Alkanoylamino, Sulfo, Halogen oder Carboxy substituiertes C₁-C₆-Alkylenphenylen oder insbesondere Phenylen, oder
d) Reste der Formel (21), worin
   die Benzolringe l und ll unsubstituiert oder ein- oder zweifach durch C₁-C₄-Alkyl, C₁-C₄-Alkoxy, Halogen oder Sulfo, insbesondere Sulfo, substituiert sind und
   L die direkte Bindung oder
   ein Brückenglied der Formel -CH=CH-, -NH-, -CO-, -NH-CO-, -CO-NH-, -NH-CO-NH-, -NH-CO-CO-NH- oder ein Brückenglied der Formel (22), vorzugsweise ein Brückenglied der Formel -CH=CH-, -NH-CO- oder -CO-NH- und insbesondere ein Brückenglied der Formel -CH=CH- oder -NH-CO- ist, oder
e) Reste der Formel (23), worin
   die Benzolringe lll und IV unsubstituiert oder ein- oder zweifach durch C₁-C₄-Alkyl, C₁-C₄-Alkoxy, Halogen oder Sulfo, insbesondere Sulfo, substituiert sind,
   R₁₈, R₁₉, R₂₀, R₂₁, R₂₂ und R₂₃ unabhängig voneinander Wasserstoff, C₁-C₄-Alkyl, C₁-C₄-Alkoxy, Halogen oder Sulfo, insbesondere Wasserstoff oder Sulfo, sind,
   U₁, U₂ und U₃ unabhängig voneinander Reste der Formel -NH-CO-, -CO-NH-, -NH-CO-CO-NH- oder der obigen Formel (22), insbesondere Reste der Formel -NH-CO-, -CO-NH- oder -NH-CO-CO-NH- und vorzugsweise Reste der Formel -NH-CO- oder -CO-NH-, sind und
   m die Zahl 0 oder 1, insbesondere die Zahl 0, ist.

Besonders bevorzugt sind die Brückenglieder L₁ und L₂
a) C₂-C₆-Alkylenreste, oder
b) gegebenenfalls durch C₁-C₄-Alkyl, C₁-C₄-Alkoxy, Halogen oder Sulfo, insbesondere Sulfo, substituiertes Phenylen, oder
c) Reste der Formel (21), worin
   die Benzolringe l und ll unsubstituiert oder ein- oder zweifach durch C₁-C₄-Alkyl, C₁-C₄-Alkoxy, Halogen oder Sulfo, insbesondere Sulfo, substituiert sind und
   L die direkte Bindung oder
   ein Brückenglied der Formel -CH=CH-, -NH-, -CO-, -NH-CO-, -CO-NH-, -NH-CO-NH-, -NH-CO-CO-NH- oder ein Brückenglied der Formel (22), vorzugsweise ein Brückenglied der Formel -CH=CH-, -NH-CO- oder -CO-NH- und insbesondere ein Brückenglied der Formel -CH=CH- oder -NH-CO- ist, oder
d) Reste der Formel (23), worin
   die Benzolringe lll und IV unsubstituiert oder ein- oder zweifach durch C₁-C₄-Alkyl, C₁-C₄-Alkoxy, Halogen oder Sulfo, insbesondere Sulfo, substituiert sind,
   R₁₈, R₁₉, R₂₀, R₂₁, R₂₂ und R₂₃ unabhängig voneinander Wasserstoff, C₁-C₄-Alkyl, C₁-C₄-Alkoxy, Halogen oder Sulfo, insbesondere Wasserstoff oder Sulfo, sind,
   U₁, U₂ und U₃ unabhängig voneinander Reste der Formel -NH-CO-, -CO-NH-, -NH-CO-CO-NH- oder der obigen Formel (22), insbesondere Reste der Formel -NH-CO-, -CO-NH- oder -NH-CO-CO-NH- und vorzugsweise Reste der Formel -NH-CO- oder -CO-NH-, sind und
   m die Zahl 0 oder 1, insbesondere die Zahl 0, ist.

Vorzugsweise haben in den Fixiermitteln der Formel (17)
R₁₄ und R₁₅ identische Bedeutungen,
L₁ und L₂ identische Bedeutungen, und
W₃, W₄ und W₅ identische Bedeutungen.

Besonders bevorzugt sind solche Fixiermittel der Formel (16) oder (17), worin
R₁₄ und R₁₅ Wasserstoff oder C₁-C₄-Alkyl, insbesondere Wasserstoff, sind,
Y₂ und Y₃ Chlor sind,
für L₁ und L₂ die oben angegebenen Bedeutungen und Bevorzugungen gelten,
n die Zahl 0 oder 1, vorzugsweise die Zahl 0 ist,
Z ein Rest der Formel -CH₂CH₂OSO₃H, -CH₂CH₂CI oder -CH=CH₂ ist,
R ein Rest der Formel (20a), (20c) oder (20d), insbesondere ein Rest der Formel (20a) oder (20c) ist und
Hal Brom oder Chlor, insbesondere Brom, bedeutet.

Von besonderem Interesse sind Fixiermittel der Formel (16) oder Fixiermittel der Formel (17), worin n die Zahl 0 bedeutet. Von ganz besonderem Interesse sind Fixiermittel der Formel (16).

Gegenstand der vorliegenden Erfindung sind ferner die neuen Verbindungen der Formeln (16) und (17), wobei für R₁₄, R₁₅, Y₂, Y₃, L₁, L₂, W₁, W₂, W₃, W₄, W₅ und n die unter den Formeln (16) und (17) angegebenen Bedeutungen gelten,
mit der Massgabe, dass, falls die Verbindungen der Formel (16) einen Rest W₁ und einen Rest W₂ der Formel (19) enthalten und Y₂ Chlor oder sulfosubstituiertes Phenyl bedeutet und R ein Rest der Formel (20a), (20c) oder (20d) ist, die Verbindungen der Formel (16) zwei voneinander verschiedene Reste R enthalten, und
der Massgabe, dass die Verbindungen der Formel (17) nicht zwei identische Reste W₃ und W₅ der Formel (19) enthalten, falls R ein Rest der Formel (20a), (20c) oder (20d) ist und Y₃ Chlor bedeutet und n die Zahl 0 ist und L₁ ein gegebenenfalls substituiertes Phenylen- oder ein gegebenenfalls substituiertes Stilben-Brückenglied ist.

Für die neuen Verbindungen der Formeln (16) und (17) gelten die oben angegebenen Bevorzugungen.

Gegenstand der vorliegenden Erfindung sind ferner Verfahren zur Herstellung der neuen Verbindungen der Formeln (16) und (17).

Das Verfahren zur Herstellung der neuen Verbindungen der Formel (16) ist dadurch gekennzeichnet, dass man Cyanurhalogenid, insbesondere Cyanurfluorid oder vorzugsweise Cyanurchlorid, mit einer Verbindung der Formel

W₁-H (26),

einer Verbindung der Formel

W₂-H (27)

und gegebenenfalls einer Verbindung der Formel

Y₂-H (28)

umsetzt, wobei W₁ und W₂ die unter Formel (16) angegebenen Bedeutungen haben und Y₂ Amino, gegebenenfalls im Alkylteil substituiertes N-Mono- oder N,N-Di-C₁-C₄-Alkylamino, gegebenenfalls im Cycloalkylring substituiertes C₅-C₇-Cycloalkylamino, gegebenenfalls im Phenylring substituiertes Phenylamino oder N-C₁-C₄-Alkyl-N-phenylamino oder gegebenenfalls weitere Heteroatome enthaltende N-Heterocyclen bedeutet.

Vorzugsweise setzt man Cyanurhalogenid zunächst mit in etwa stöchiometrischen Mengen einer Verbindung der Formel (26) bei einer Temperatur von -5 bis 20°C, vorzugsweise 0 bis 5°C um, wobei der pH-Wert durch Zugabe geeigneter Basen, z.B. Alkalimetallbasen wie Lithium-, Natrium- oder Kaliumhydroxid oder -carbonat, neutral bis sauer, vorzugsweise bei 2 bis 7, insbesondere 2 bis 4, gehalten wird. Zu dem erhaltenen Reaktionsgemisch werden zweckmässigerweise in etwa stöchiometrische Mengen einer Verbindung der Formel (27) gegeben und diese bei leicht erhöhter Temperatur, vorzugsweise bei 10 bis 60°C, insbesondere 15 bis 30°C, und einem neutralen bis leicht sauren pH-Wert, der vorzugsweise 6 bis 7 beträgt, mit dem Triazinderivat zur Reaktion gebracht. Handelt es sich bei den Verbindungen der Formeln (26) und (27) um identische Verbindungen, so setzt man vorteilhaft ca. 2 Mol-Aequivalente der Verbindung der Formel (26) ein und setzt diese mit ca.1 Mol-Aequivalent Cyanurhalogenid um.

Die gemäss dem oben beschriebenen Verfahren erhältlichen Triazinylverbindungen enthalten noch ein Halogenatom, welches, falls gewünscht, durch Reaktion mit einer Verbindung der Formel (28) bei erhöhter Temperatur, vorzugsweise 20 bis 70°C, und einem neutralen bis leicht alkalischen pH-Wert, der je nach eingesetzter Verbindung der Formel (28) z.B. 7 bis 9 beträgt, in eine Aminogruppe, in eine gegebenenfalls im Alkylteil substituierte N-Mono- oder N,N-Di-C₁-C₄-Alkylaminogruppe, in eine gegebenenfalls im Cycloalkylring substituierte C₅-C₇-Cycloalkylaminogruppe, in eine gegebenenfalls im Phenylring substituierte Phenylamino- oder N-C₁-C₄-Alkyl-N-phenylaminogruppe oder in eine gegebenenfalls weitere Heteroatome enthaltende N-heterocyclische Gruppe Y₂ umgewandelt werden kann.

Das Verfahren zur Herstellung der neuen Verbindungen Formel (17), worin n die Zahl 0 ist, ist dadurch gekennzeichnet, dass man eine Verbindung der Formel 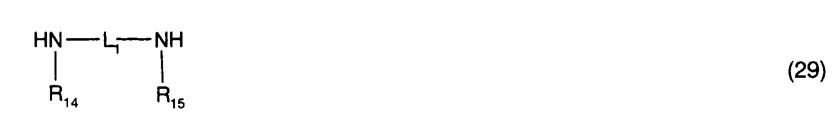 in beliebiger Reihenfolge mit einer Verbindung der Formel 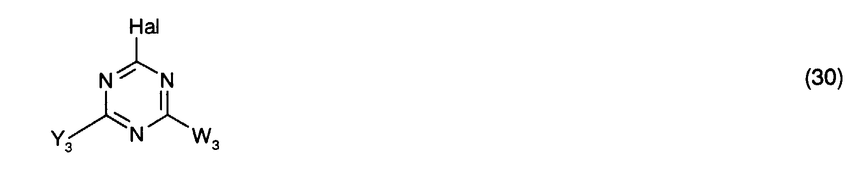 und einer Verbindung der Formel 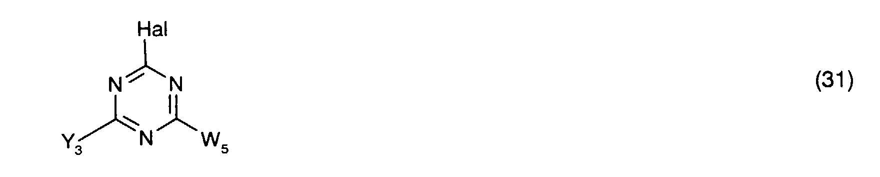 umsetzt, wobei R₁₄, R₁₅, L₁, Y₃, W₃ und W₅ die unter Formel (17) angegebenen Bedeutungen haben und Hal Halogen, insbesondere Fluor oder vorzugsweise Chlor, bedeutet.

Die Umsetzung der Verbindung der Formel (29) mit den Verbindungen der Formeln (30) und (31) erfolgt z.B. bei leicht erhöhter Temperatur, vorzugsweise bei 10 bis 60°C, insbesondere 15 bis 50°C, und einem neutralen bis leicht sauren pH-Wert, der vorzugsweise 5 bis 7 beträgt. Handelt es sich bei den Verbindungen der Formeln (30) und (31) um identische Verbindungen, so setzt man vorteilhaft ca. 2 Mol-Aequivalente der Verbindung der Formel (30) ein und setzt diese mit ca.1 Mol-Aequivalent der Verbindung der Formel (29) um.

Eine weitere Ausführungsform zur Herstellung der neuen Verbindungen der Formel (17), worin n die Zahl 0 ist, ist dadurch gekennzeichnet, dass man eine Verbindung der Formel (29) zunächst mit Cyanurhalogenid, insbesondere Cyanurfluorid oder vorzugsweise Cyanurchlorid, kondensiert, und das erhaltene Produkt dann in beliebiger Reihenfolge mit einer Verbindung der Formel H-W₃ und einer Verbindung der Formel H-W₅ umsetzt.

Die Umsetzung von Cyanurhalogenid mit der Verbindung der Formel (29) erfolgt z.B. wie oben für die Umsetzung von Cyanurhalogenid mit der Verbindung der Formel (26) beschrieben. Die Umsetzung des so erhaltenen Reaktionsprodukts mit einer Verbindung der Formel H-W₃ und einer Verbindung der Formel H-W₅ kann wie oben für die Umsetzung der Verbindung der Formel (29) mit den Verbindungen der Formeln (30) und (31) beschrieben erfolgen.

Das Verfahren zur Herstellung der neuen Verbindungen der Formel (17), worin n die Zahl 1 ist, ist dadurch gekennzeichnet, dass man eine Verbindung der Formel 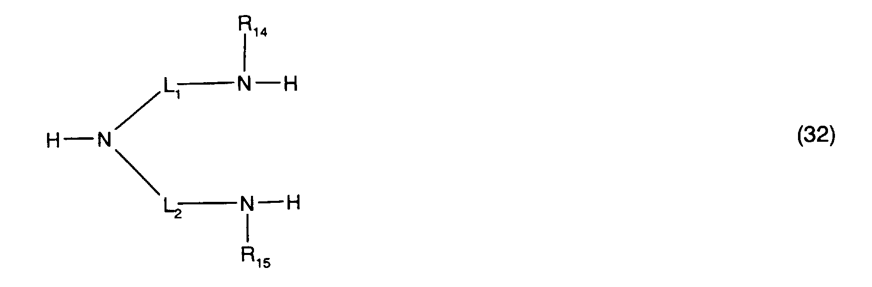 in beliebiger Reihenfolge mit den Verbindungen der Formeln (30) und (31) umsetzt und das erhaltene Reaktionsprodukt anschliessend mit einer Verbindung der Formel 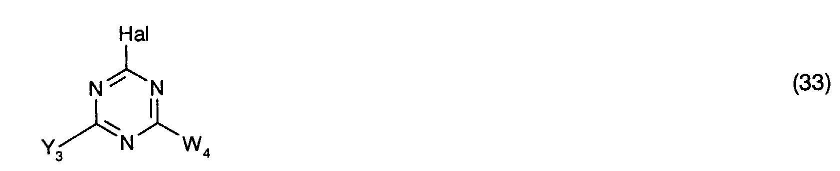 umsetzt, wobei R₁₄, R₁₅, L₁, L₂, Y₃, W₃, W₄ und W₅ die unter Formel (17) angegebenen Bedeutungen haben und Hal Halogen, insbesondere Fluor oder vorzugsweise Chlor, bedeutet.

Die Umsetzung der Verbindung der Formel (32) mit den Verbindungen der Formeln (30) und (31) kann wie oben für die Umsetzung der Verbindung der Formel (29) mit den Verbindungen der Formeln (30) und (31) beschrieben erfolgen. Die anschliessende Umsetzung des Reaktionsprodukts mit der Verbindung der Formel (33) kann analog erfolgen.

Die in den obigen Verfahren eingesetzten Verbindungen sind bekannt oder können in Analogie zu bekannten Verbindungen erhalten werden.

Die Verbindungen der Formeln (16) und (17) liegen entweder in der Form ihrer freien Säure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Besondere Vorrichtungen sind für das erfindgungsgemässe Verfahren zum Färben nicht erforderlich. Es können die üblichen Färbeapparate und -maschinen verwendet werden.

Das Flottenverhältnis kann innerhalb eines weiten Bereichs gewählt werden, z.B. von 1:5 bis 1:60, insbesondere von 1:5 bis 1:30.

Das Färben erfolgt z.B. bei einer Temperatur von 80 bis 110°C, insbesondere einer Temperatur von 95 bis 105°C. Bevorzugt erfolgt das Färben bei einem pH-Wert von 3 bis 6, insbesondere einem pH-Wert von 3 bis 5,5 und vorzugsweise einem pH-Wert von 4 bis 5.

Bevorzugt ist das Färben nach dem Ausziehverfahren.

Die Fixierung mit dem Fixierungsmittel kann sowohl während des Färbeprozesses als auch anschliessend erfolgen.

Bevorzugt verwendet man das Fixiermittel in einer Menge von 0,1 bis 10 Gew.-%, insbesondere 0,5 bis 5 Gew.-% und vorzugsweise 0,5 bis 3 Gew.-%, bezogen auf das Gewicht des zu färbenden Fasermaterials.

Die Fixierung mit dem Fixierungsmittel erfolgt vorzugsweise in einem Schritt, worin der pH auf einen Wert grösser oder gleich 6, vorzugsweise 6 bis 12 und insbesondere 6 bis 10, gestellt wird. Bevorzugt wird hierbei der pH auf einen Wert grösser oder gleich 7, vorzugsweise 7 bis 12 und insbesondere 7 bis 10, gestellt.

So kann z.B. die Fixierung nach dem Färben in einem separaten Bad erfolgen, wobei das Färben ohne Gegenwart des Fixiermittels erfolgt. Auch in diesem Fixierschritt hat sich eine Erhöhung des pH-Wertes wie oben angegeben als vorteilhaft erwiesen.

Gemäss einer bevorzugten Ausführungsform erfolgt das Färben in Gegenwart des Fixiermittels, welches z.B. während des Färbeprozesses oder schon bereits zu Beginn des Färbeprozesses zu dem Färbebad gegeben wird. Bevorzugt wird hierbei während des Färbeprozesses oder im Anschluss an diesen der pH wie oben für den Fixierschritt angegeben erhöht.

Das erfindungsgemässe Verfahren eignet sich nach an sich bekannten Methoden zum Färben von natürlichen oder synthetischen Polyamidfasermaterialien, wie z.B. Fasermaterialien aus Seide und insbesondere Wolle und synthetischen Polyamiden. Bevorzugt ist das Färben von natürlichen Polyamidfasermaterialien, insbesondere von Wolle. Das oben genannte Textilmaterial kann in den verschiedensten Verarbeitungsformen vorliegen, wie z.B. als Faser, Garn, Gewebe oder Gewirke.

Man erhält egale Färbungen mit guten Allgemeinechtheiten, insbesondere guter Reib-, Nass-, Nassreib- und Lichtechtheit. Hervorzuheben sind die durch die Behandlung mit dem Fixiermittel verbesserten Nassechtheiten der Färbungen, wobei die Färbungen gleichzeitig eine sehr gute Egalität aufweisen.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Herstellungsbeispiel 1:

19,1 Teile 1,3-Phenylendiamin-4-sulfonsäure (98,6%) werden in 100 Teilen Wasser und 52 Teilen einer wässrigen, 2-normalen Natriumhydroxidlösung bei einem pH-Wert von 7 gelöst und innerhalb von 50 Minuten, bei einer Temperatur von 5°C, in ein Gemisch bestehend aus 18,5 Teilen Cyanurchlorid, 100 Teilen Eis und 50 Teilen Wasser getropft. Während des Zutropfens wird der pH bei einem Wert von 3 bis 3,5 gehalten. Anschliessend wird mit 50 Teilen einer wässrigen, 2-normalen Natriumhydroxidlösung der pH-Wert innerhalb von 70 Minuten auf 7 erhöht. Nach einer Stunde werden 25 Teile Salzsäure (37%) und 200 Teile Wasser zugegeben und, bei einer Temperatur von 5 bis 15°C, 25 Teile einer wässrigen, 4-molaren Natriumnitritlösung innerhalb von 25 Minuten zudosiert. Nach zwei Stunden wird das überschüssige Natriumnitrit mit Sulfaminsäure zerstört. Währenddessen werden 22,5 Teile 2-Naphthylamin-5-sulfonsäure in 100 Teilen Wasser und 52 Teilen einer wässrigen, 2-normalen Natriumhydroxidlösung bei einem pH-Wert von 7 gelöst und innerhalb von 30 Minuten in das Reaktionsgemisch getropft. Darauf wird der pH mittels 112 Teilen einer wässrigen, 2-normalen Natriumhydroxidlösung innerhalb von 80 Minuten auf einen Wert von 7 gestellt. Anschliessend wird eine Lösung von 12,2 Teilen N-Ethylanilin in 100 Teilen 1-molarer Salzsäure innerhalb von 15 Minuten zugetropft, gefolgt von der Zugabe von 101 Teilen einer wässrigen, 2-normalen Natriumhydroxidlösung innerhalb von 50 Minuten. Die dunkelrote Reaktionslösung wird mit 500 Teilen einer wässrigen Natriumchloridlösung versetzt, das ausgefallene Produkt abfiltriert, mit 10%-iger wässriger Natriumchloridlösung gewaschen und im Vakuum bei einer Temperatur von 70°C getrocknet. Man erhält 52,5 Teile einer Zwischenverbindung der Formel 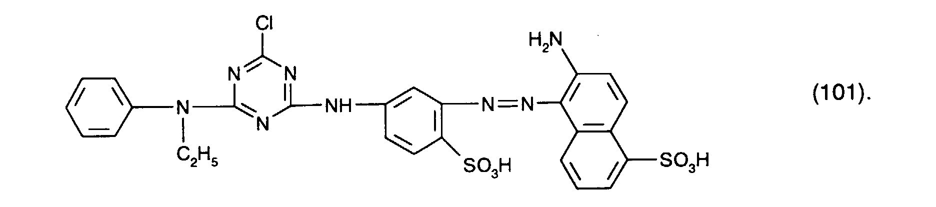 10 Teile des Zwischenprodukts der Formel (101) werden in 200 Teilen Wasser gelöst und innerhalb von 4 Stunden, bei einer Temperatur von 40°C, in eine Lösung von 14 Teilen 3-Methylaminopropylamin in 14 Teilen Wasser getropft. Man lässt eine Stunde bei einer Temperatur von 40°C nachrühren und gibt anschliessend 25 Teile Salzsäure hinzu. Das ausgefallene Produkt wird abfiltriert und mit Wasser gewaschen. Das feuchte Nutschgut wird in 300 Teile Wasser bei einer Temperatur von 70°C gegeben und mit 10 Teilen einer wässrigen, 1-normalen Natriumhydroxidlösung neutralisiert. Das Produkt wird mit 30 Teilen Natriumchlorid ausgesalzen, bei einer Temperatur von 40°C abfiltriert und im Vakuum bei einer Temperatur von 50°C getrocknet. Man erhält 8,8 Teile eines Farbstoffs, welcher in Form der freien Säure der Verbindung der Formel 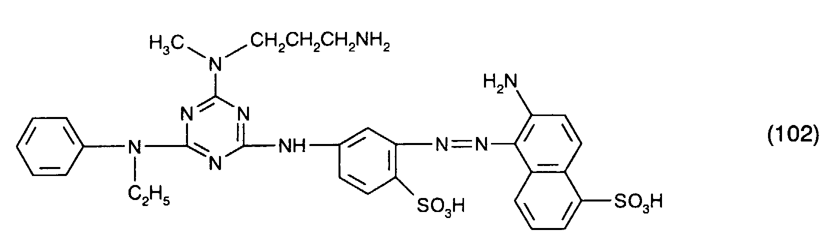 entspricht. Der erhaltene Farbstoff der Formel (102) färbt Wolle und synthetisches Polyamidfasermaterial in orangen Farbtönen.

### Herstellungsbeispiele 2 bis 25:

In analoger Weise zu den Angaben in Herstellungsbeispiel 1 können die in der folgenden Tabelle 1 in Form der freien Säuren angegebenen Farbstoffe erhalten werden, welche Wolle und synthetisches Polyamidfasermaterial in den in Spalte 3 angegebenen Farbtönen färben.

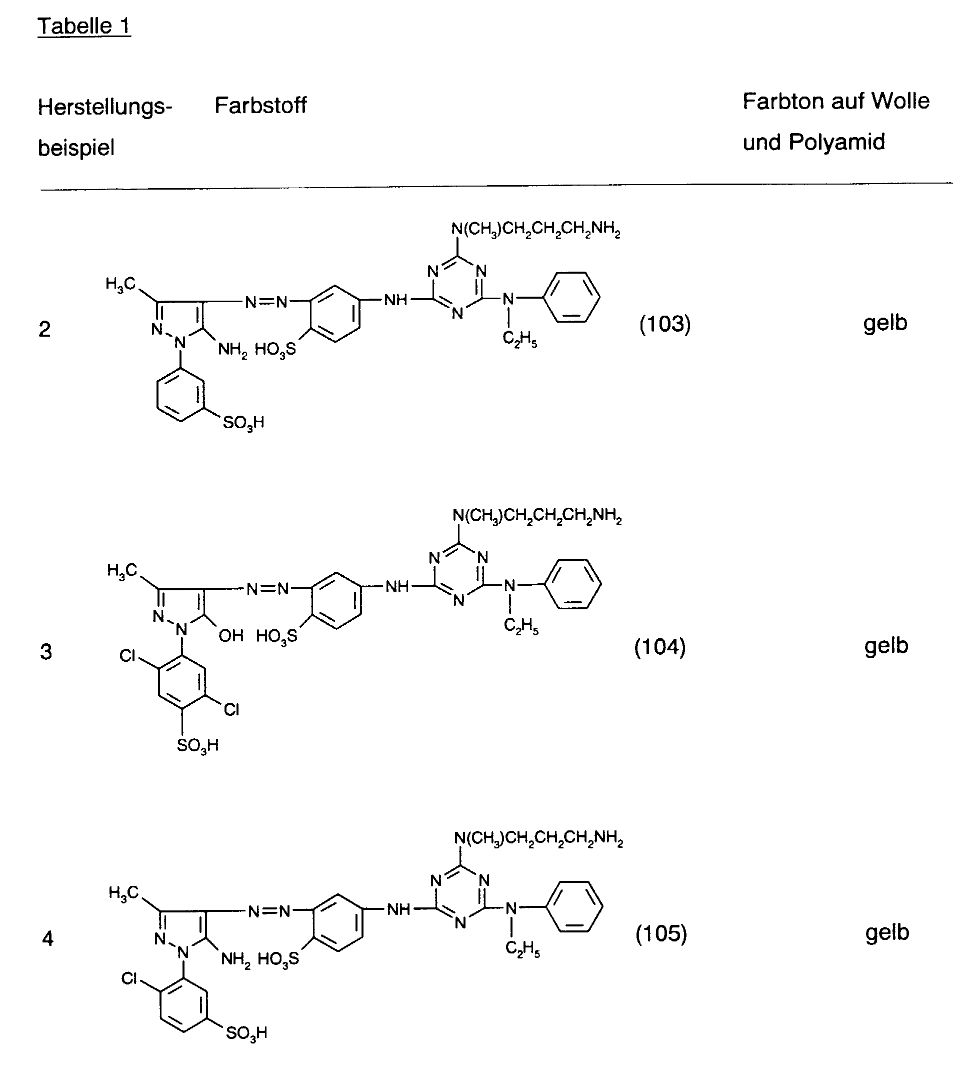

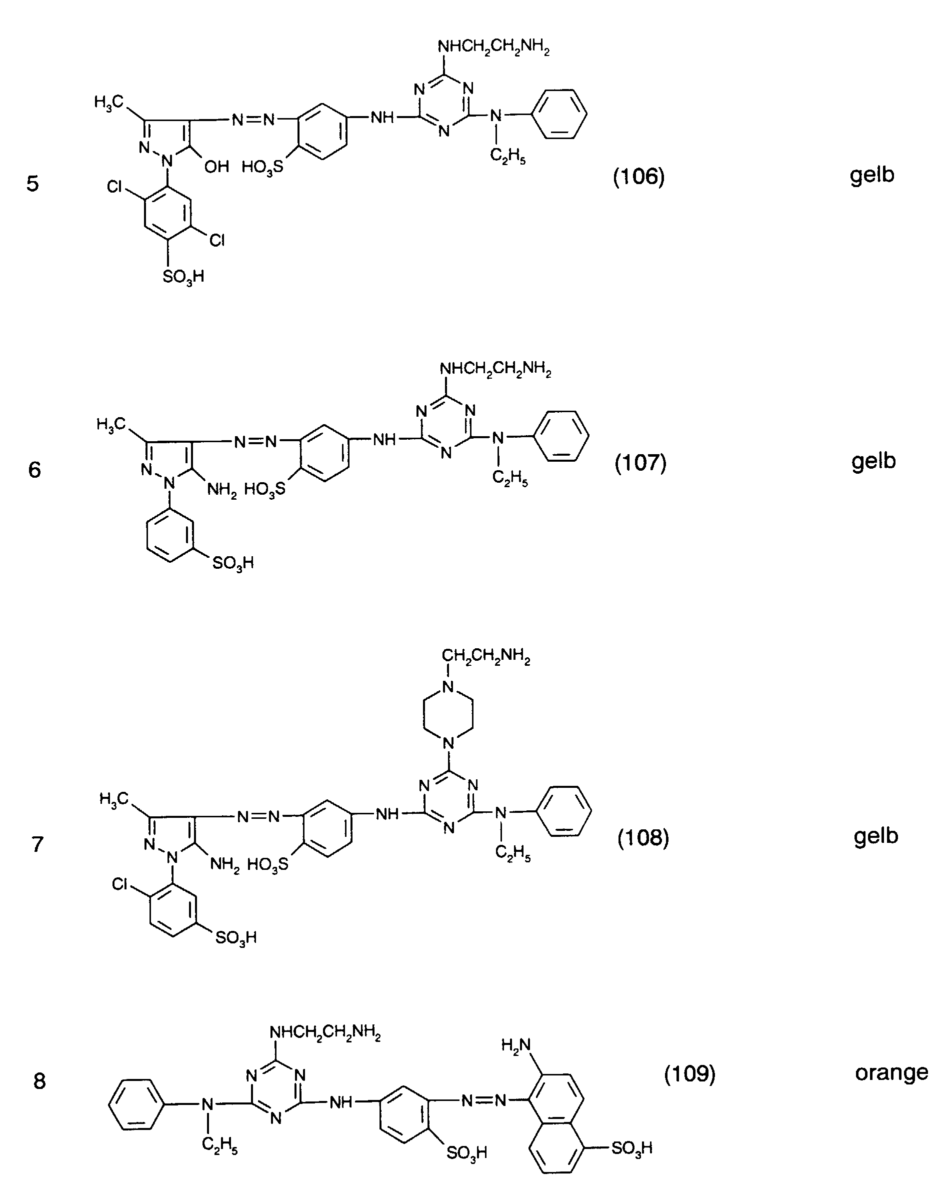

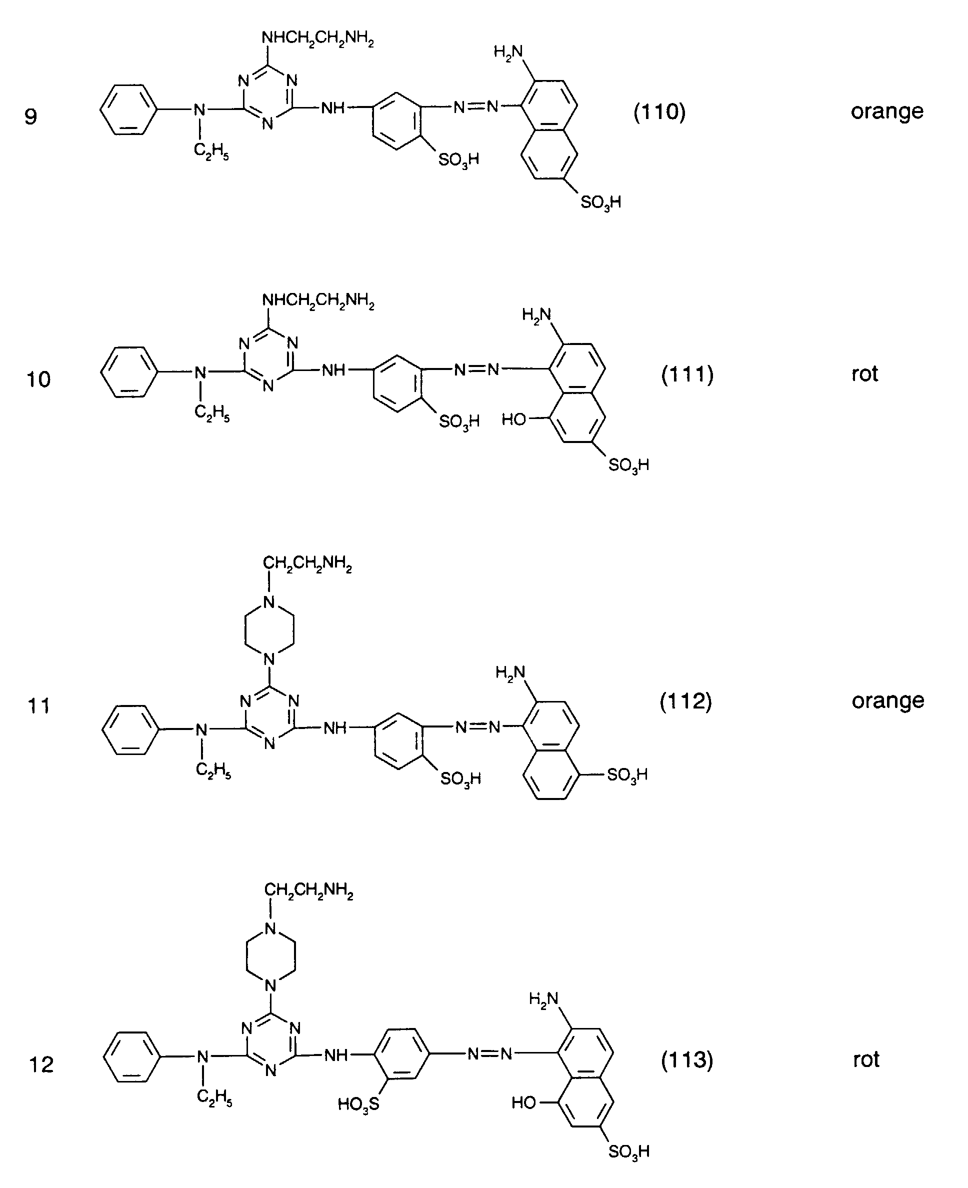

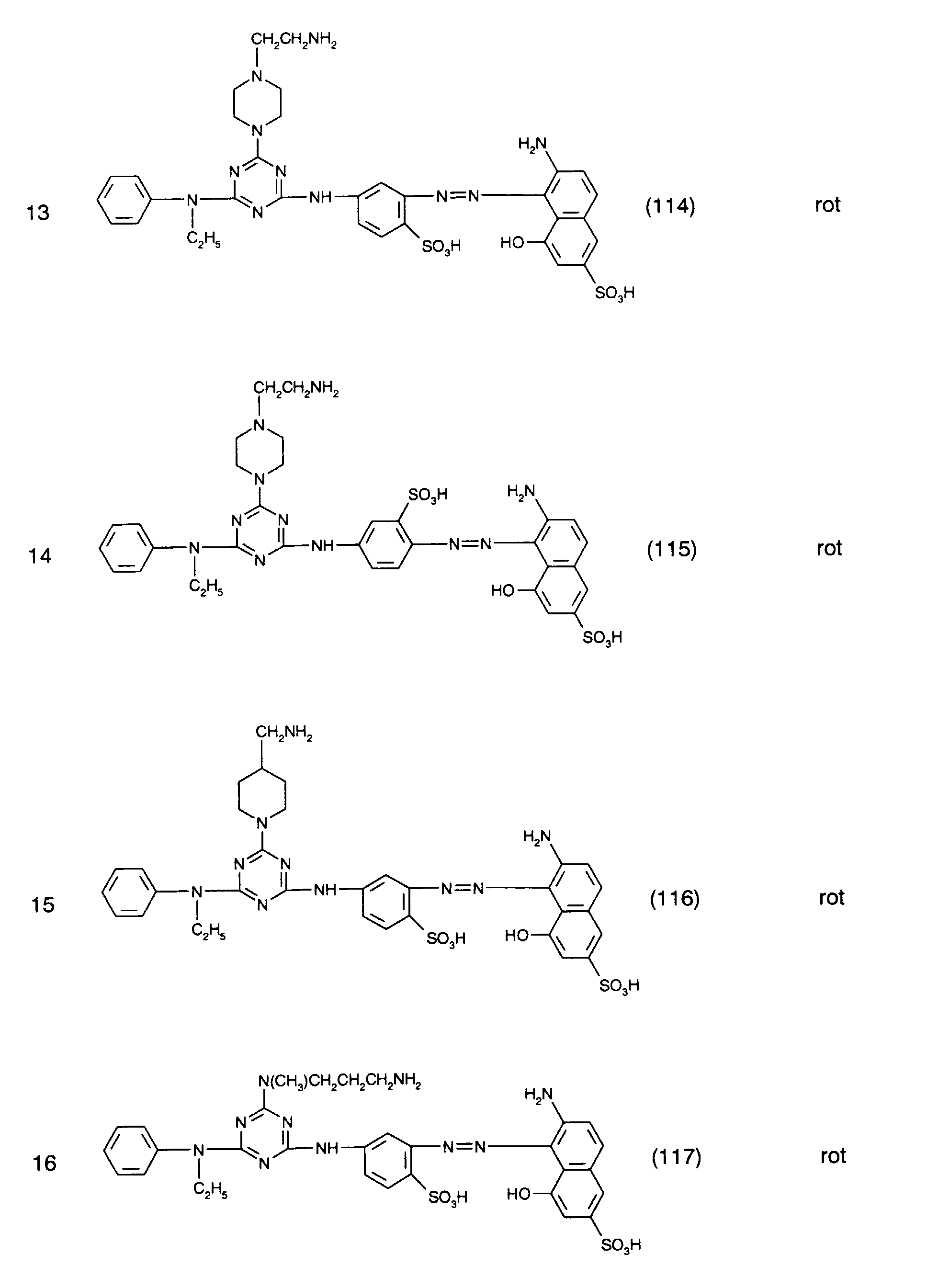

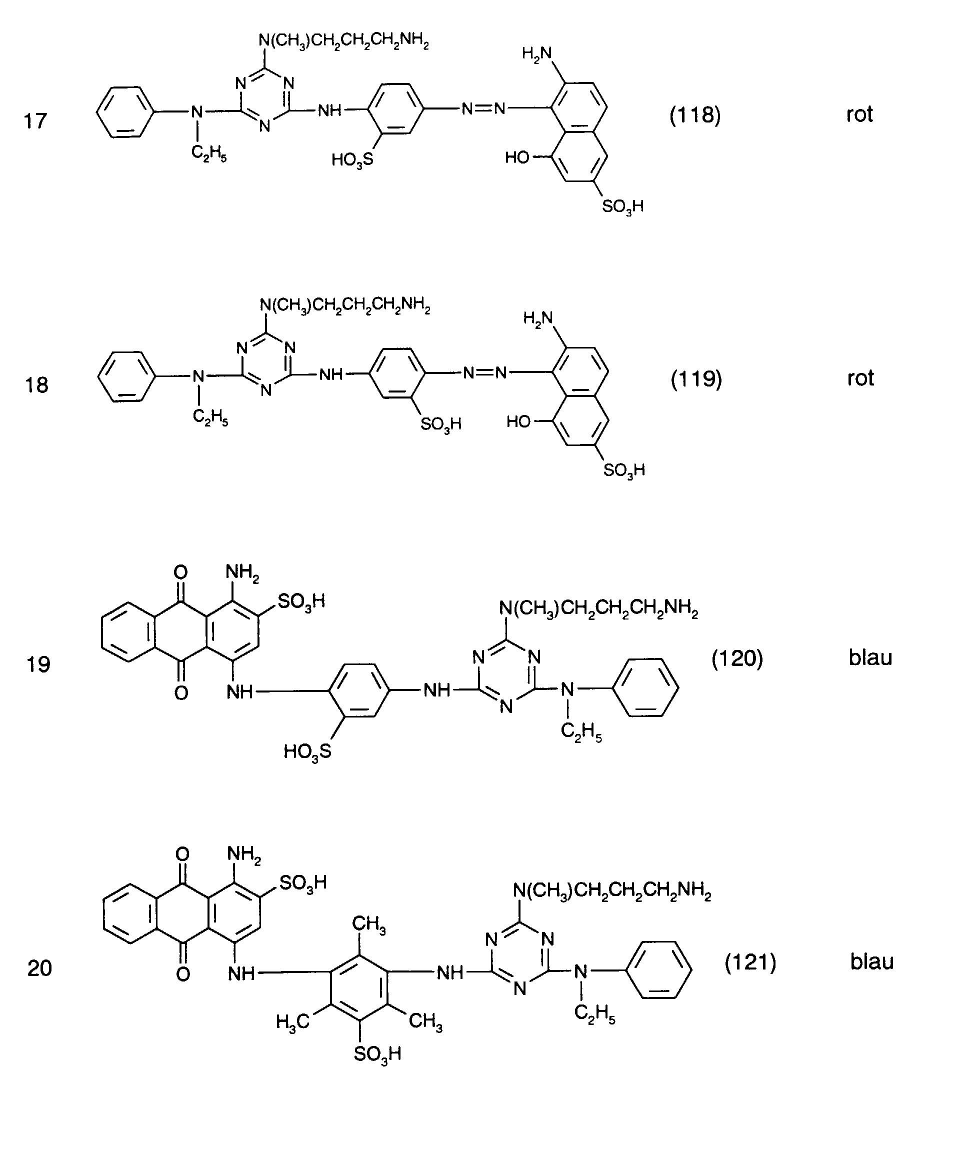

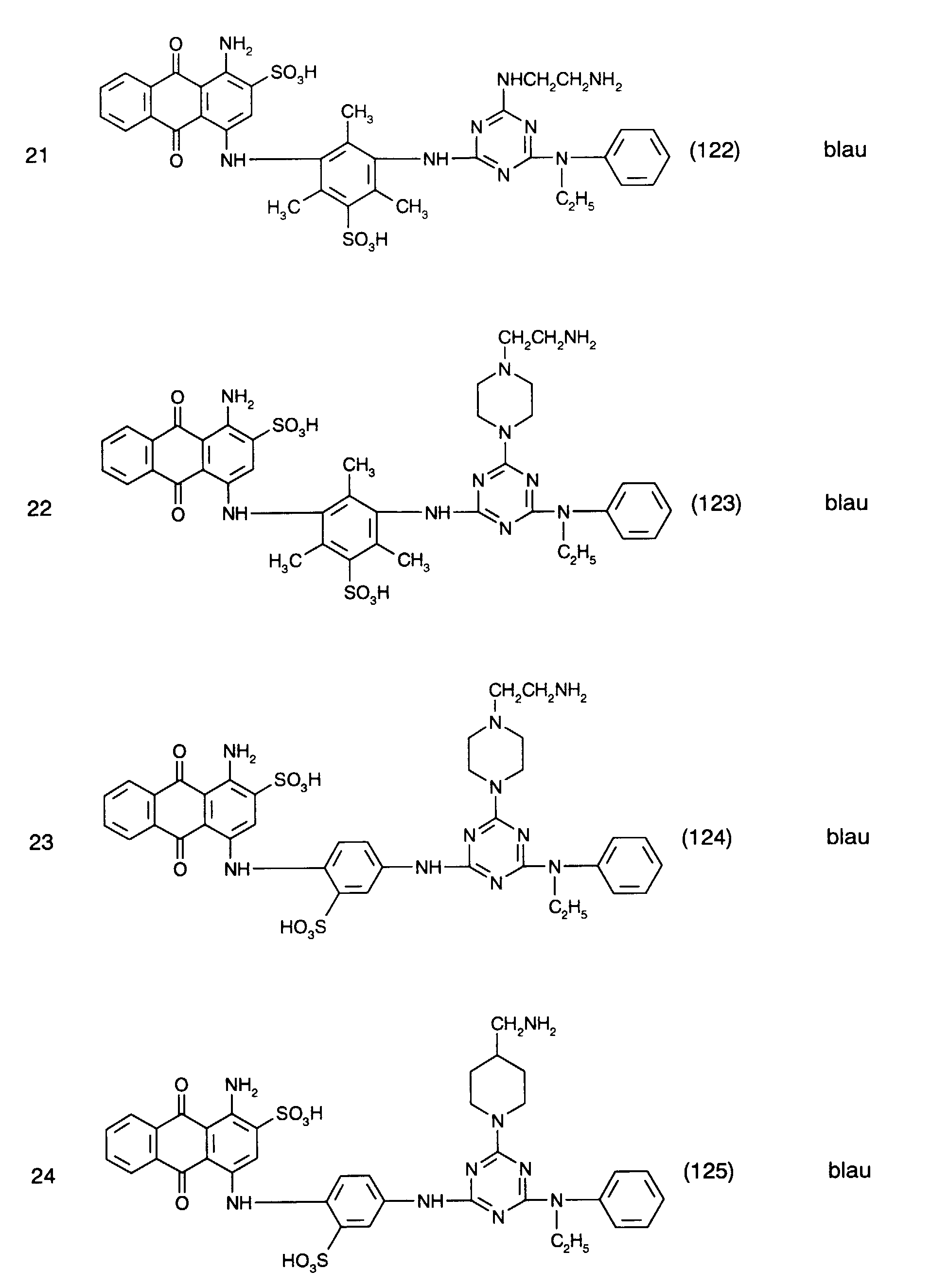

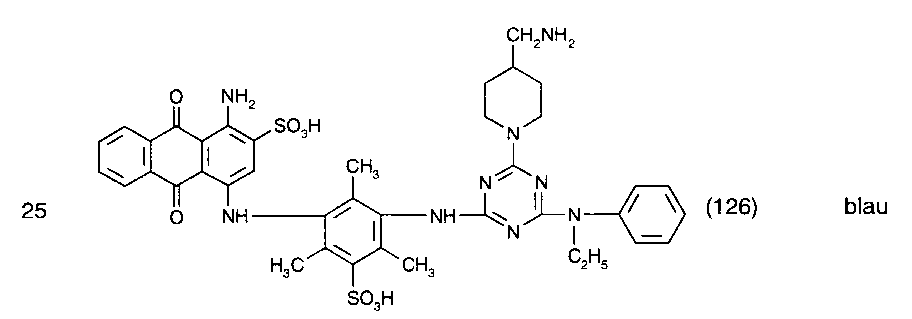

### Beispiel 1:

18,2 Teile 4,4'-Diaminobiphenyl-2,2'-disulfonsäure werden in 100 Teile Wasser suspendiert und mit 52 Teilen einer wässrigen Natriumcarbonatlösung (10 %-ig) bei einem pH-Wert von 6,5 bis 7 gelöst. Diese Lösung tropft man innerhalb von 45 Minuten bei einer Temperatur von 0°C in ein Gemisch bestehend aus 18,4 Teilen Cyanurchlorid, 240 Teilen Aceton und 120 Teilen Eis. Der pH-Wert wird hierbei mit 48,5 Teilen einer wässrigen Natriumcarbonatlösung (10%) bei 2,5 gehalten. Anschliessend tropft man 51,8 Teile einer 48%-igen, wässrigen Lösung von 2-(2-Aminoethoxy)-2'-chlor-diethylsulfon-hydrochlorid bei einer Temperatur von 5 bis 15°C zu. Gleichzeitig wird der pH mit einer 10%-igen, wässrigen Natriumcarbonatlösung bei einem Wert von 4 gehalten. Danach wird der pH mit 80 Teilen einer 10%-igen, wässrigen Natriumcarbonatlösung langsam auf einen Wert von 7 erhöht. Nach einer Nachrührzeit von einer Stunde bei Zimmertemperatur werden 25 Teile Salzsäure (37%) zugetropft. Das Lösungsmittel wird vom ausgefallenen Produkt abdekantiert. Das Produkt wird in 200 Teilen Methanol kurz verrührt, abfiltriert und im Vakuum getrocknet. Man erhält 33,7 Teile einer Verbindung, welche in Form der freien Säure der Formel 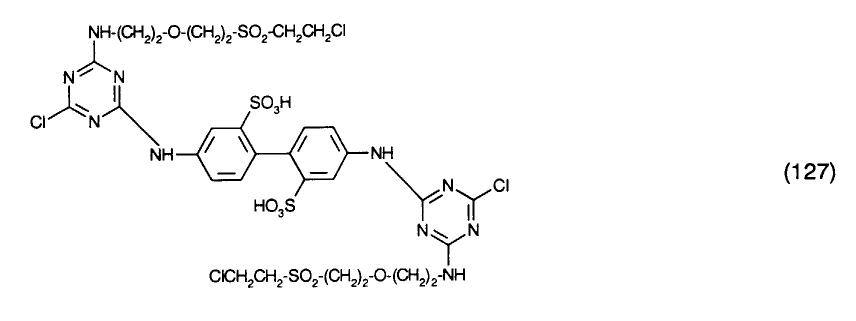 entspricht.

### Beispiel 2:

14,5 Teile 2-Aminophenylsulfonyl-ethylhydrogensulfat werden in 50 Teile Wasser suspendiert und mit 31 Teilen einer wässrigen, 1-molaren Natriumcarbonatlösung bei einem pH-Wert von 6,5 gelöst. Diese Lösung tropft man innerhalb von einer Stunde bei einer Temperatur von 0 bis -5°C in ein Gemisch bestehend aus 9,1 Teilen Cyanurchlorid, 100 Teilen Aceton und 50 Teilen Eis. Der pH-Wert wird hierbei mit 24 Teilen einer wässrigen, 1-molaren Natriumcarbonatlösung bei 2,5 gehalten. Nach einer Nachrührzeit von zwei Stunden wird eine Lösung von 8,6 Teilen 4,4'-Diaminobiphenyl-2,2'-disulfonsäure in 50 Teilen Wasser und 22 Teilen einer wässrigen, 2-normalen Natriumhydroxidlösung innerhalb von 30 Minuten bei einem pH-Wert von 4 zugetropft. Anschliessend wird 18 Stunden bei einer Temperatur von 35 bis 40°C und einem pH-Wert von 5,5 gerührt. Die Reaktionslösung wird mit 150 Teilen einer wässrigen Natriumchloridlösung versetzt. Das ausgefallene Produkt wird abfiltriert und im Vakuum getrocknet. Man erhält 25 Teile einer Verbindung, welche in Form der freien Säure der Formel 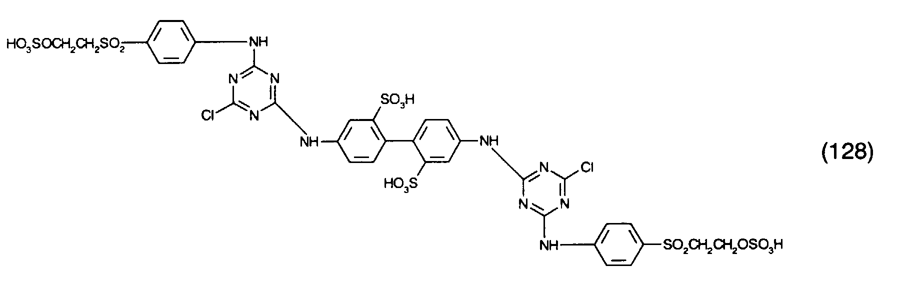 entspricht.

### Beispiele 3 bis 20:

In analoger Weise zu den Angaben in Beispiel 1 oder 2 können die in der folgenden Tabelle 2 in Form der freien Säuren angegebenen Verbindungen erhalten werden.

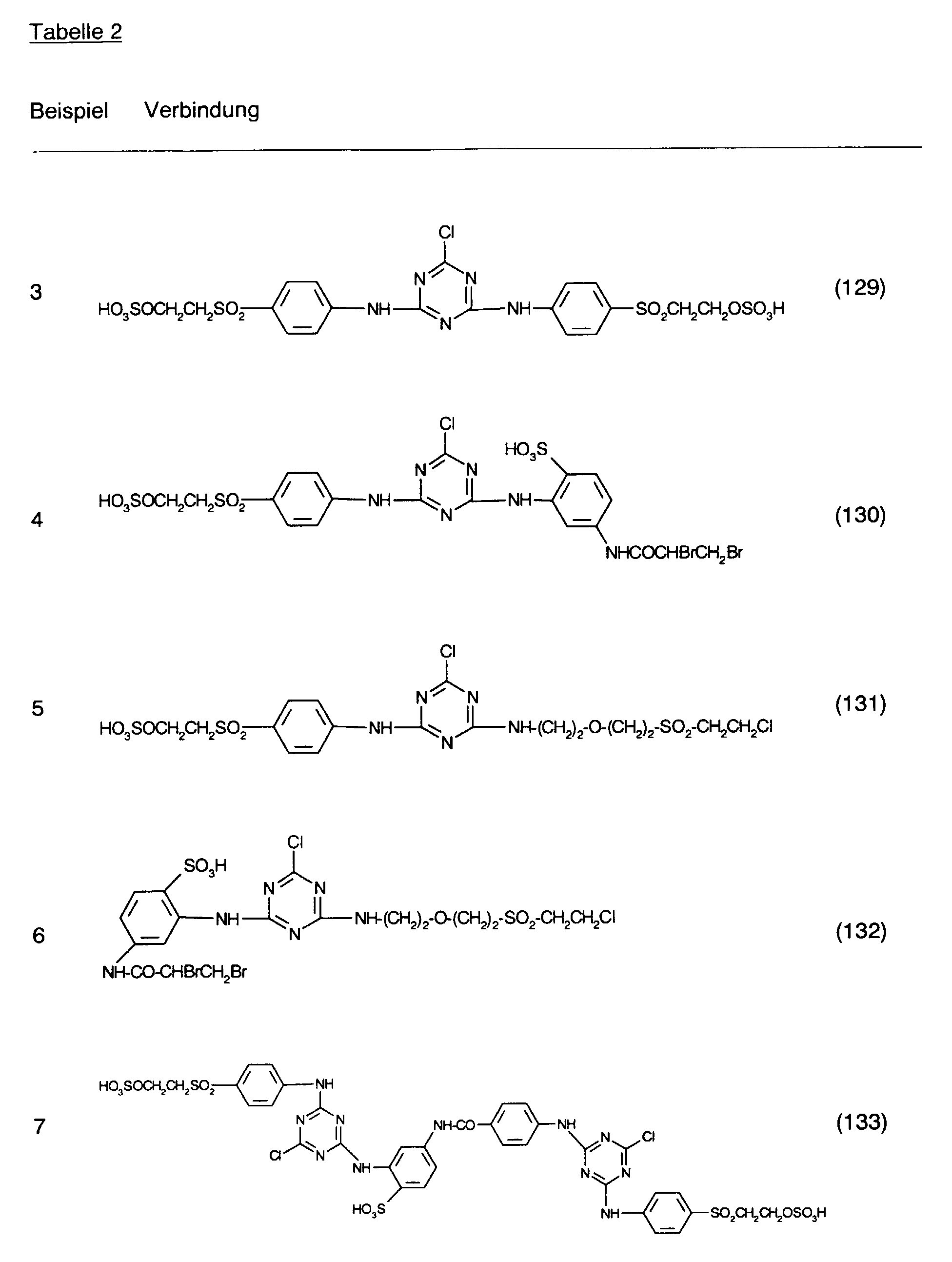

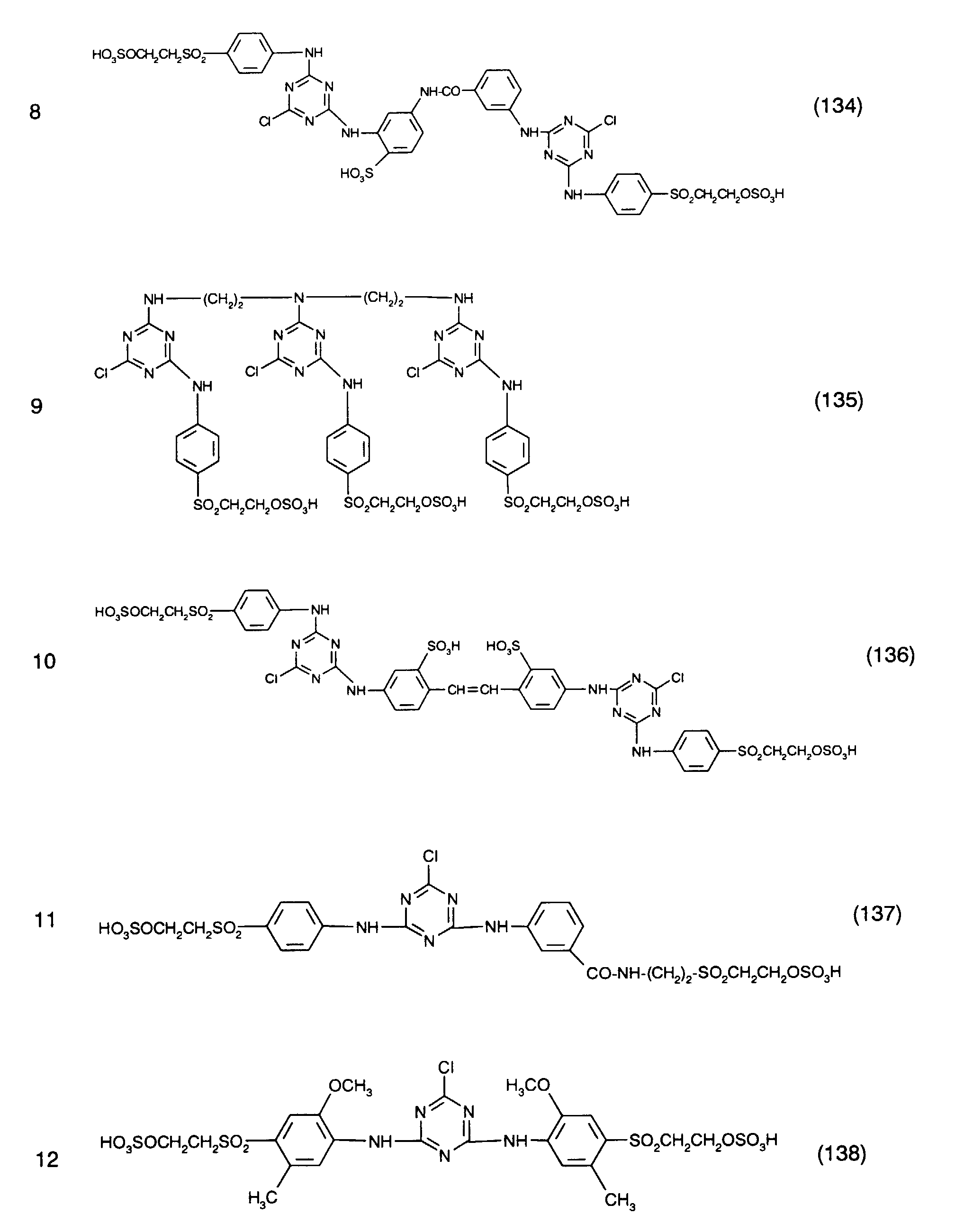

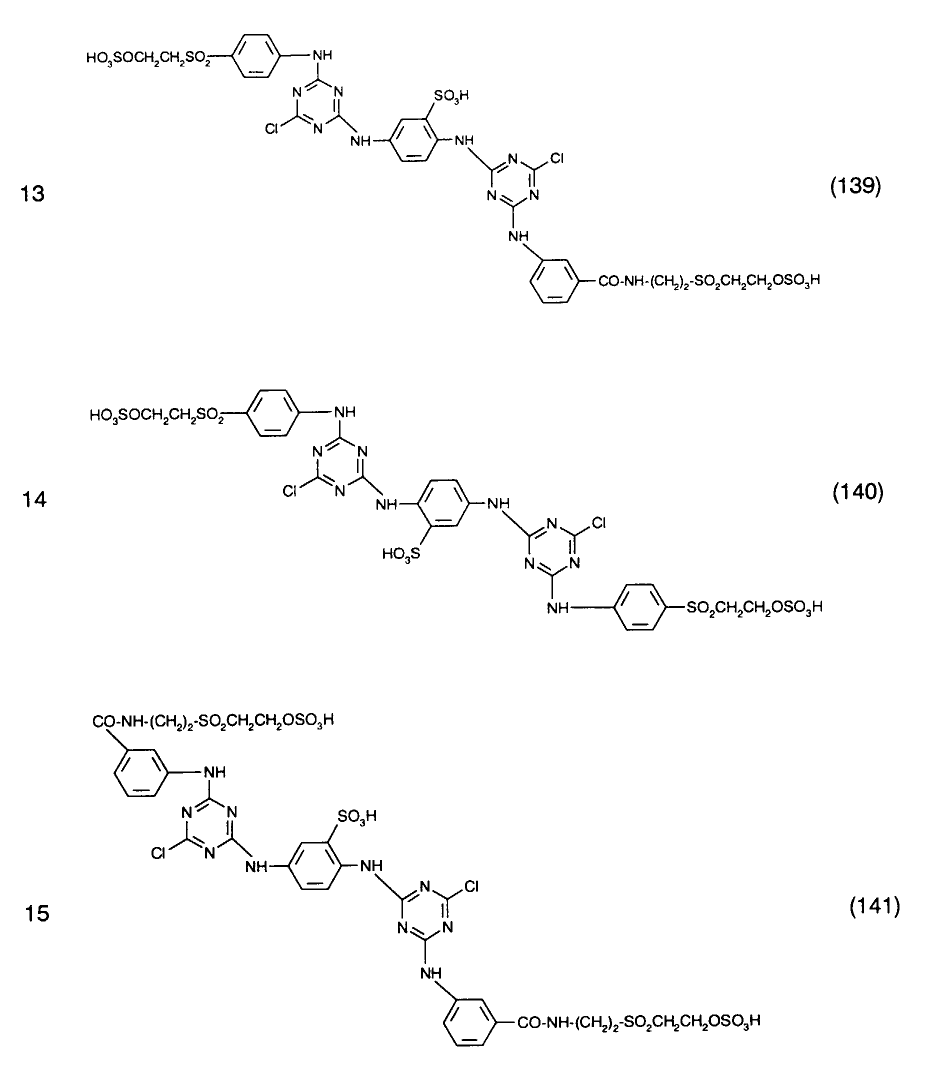

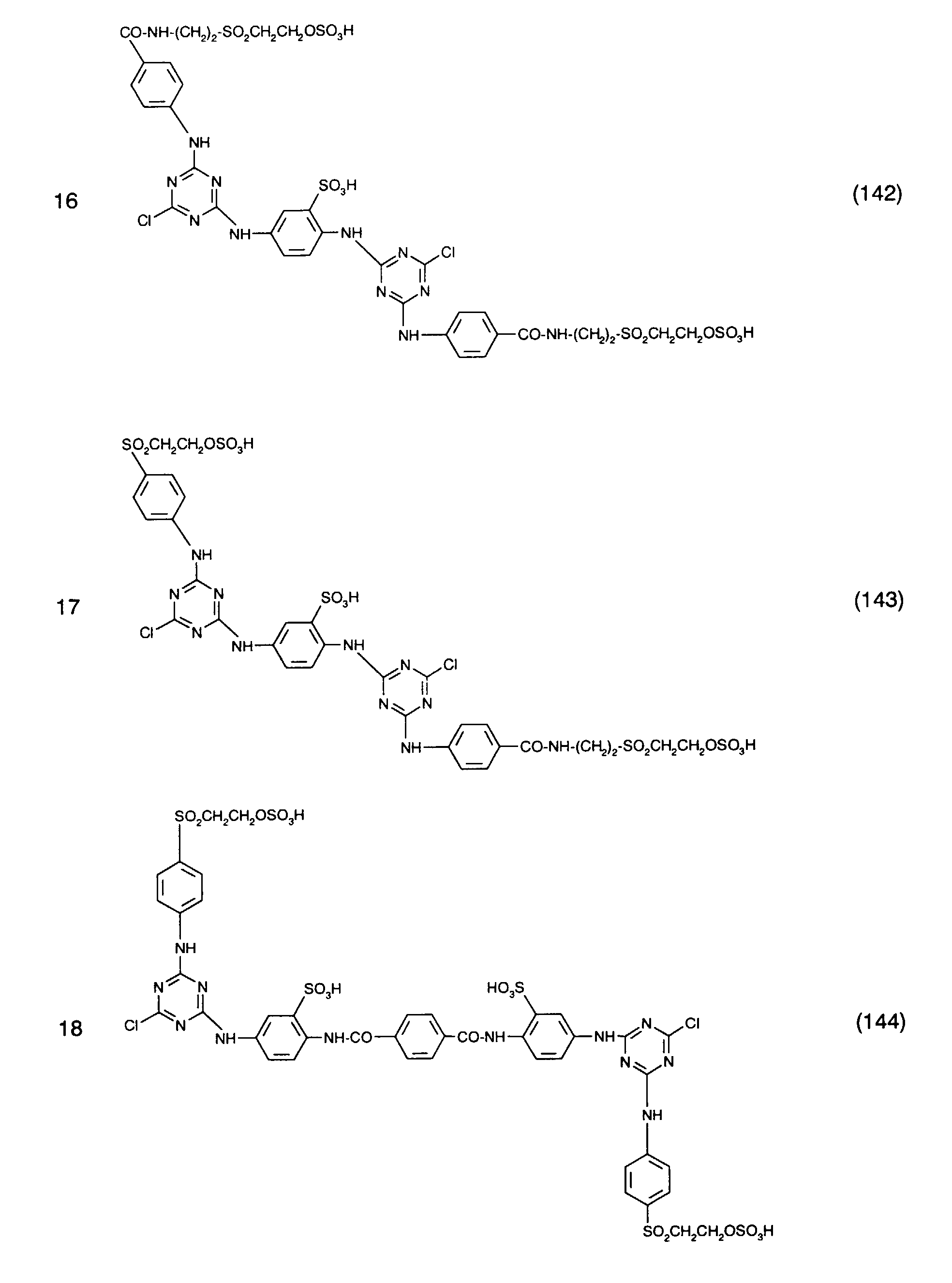

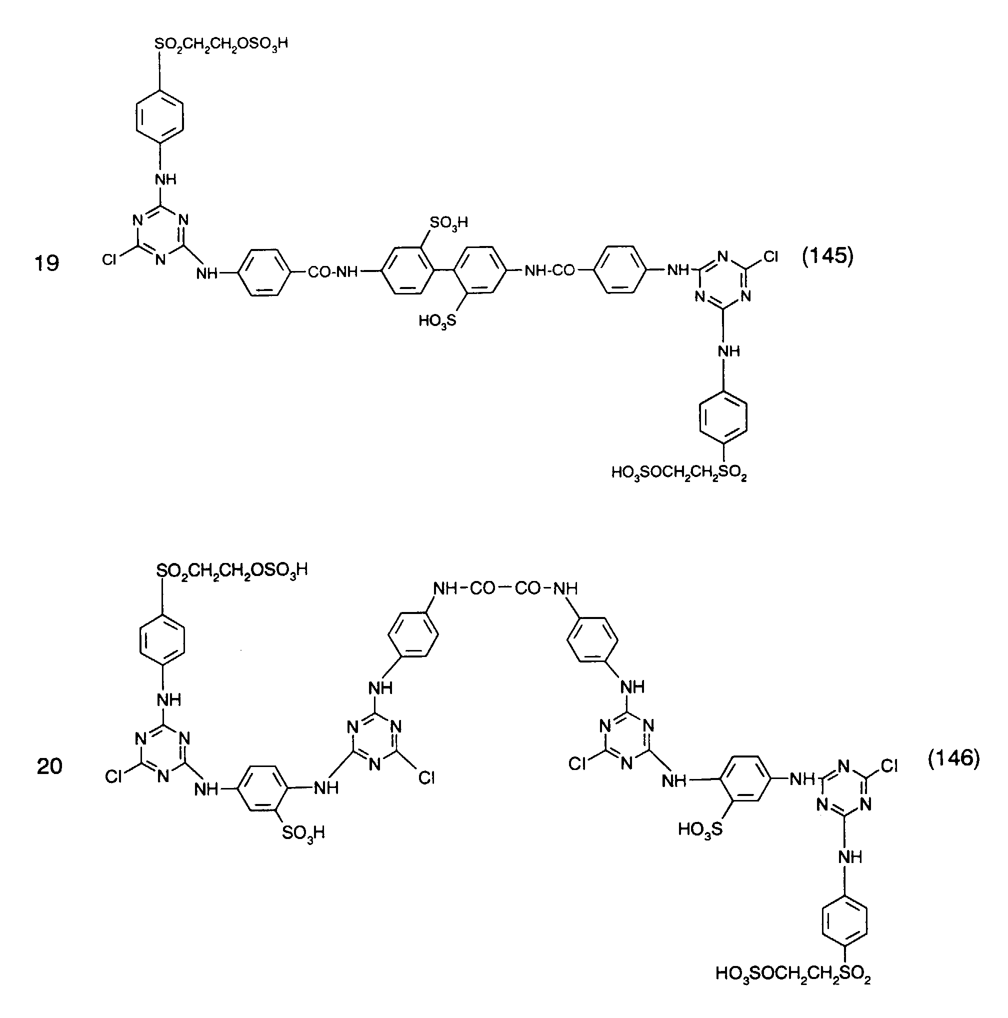

### Färbebeispiel 1:

100 Teile eines Wollgewebes werden in einem wässrigen Bad, welches 2000 Teile Wasser, 5 Teile Natriumsulfat, 2 Teile Natriumacetat und 2 Teile 80%-iger Essigsäure enthält, während 5 Minuten bei einer Temperatur von 30°C und einem pH-Wert von 4,5 vorbehandelt. Nach Zugabe einer wässrigen Lösung enthaltend 0,9 Teile des Farbstoffs der Formel (102) wird die Färbeflotte noch 5 Minuten bei einer Temperatur von 30°C gehalten und anschliessend mit einer Aufheizrate von 1,5°C pro Minute auf eine Temperatur von 100°C erhitzt. Man färbt 60 Minuten bei dieser Temperatur, kühlt dann auf 50°C ab und lässt die Färbeflotte ab. Das in einem orangen Farbton gefärbte Wollgewebe wird gespült und in einem neuen wässrigen Bad, welches 2000 Teile Wasser, 5 Teile Natriumsulfat, 11,6 Teile Dinatriumhydrogenphosphat und 7,6 Teile Kaliumhydrogenphosphat enthält, während 5 Minuten bei einer Temperatur von 30°C und einem pH-Wert von 7 vorbehandelt. Nach Zugabe einer wässrigen Lösung enthaltend 2 Teile des Fixiermittels der Formel (129) wird die Färbeflotte noch 5 Minuten bei einer Temperatur von 30°C gehalten und anschliessend mit einer Aufheizrate von 1,5°C pro Minute auf 100°C erhitzt. Diese Temperatur wird 60 Minuten gehalten. Man kühlt dann auf eine Temperatur von 50°C ab und lässt die Färbeflotte ab. Das Wollgewebe wird gespült und getrocknet. Die erhaltene Färbung ist faseregal und weist sehr gute Nassechtheiten auf.

### Färbebeispiel 2:

100 Teile eines Wollgewebes werden in einem wässrigen Bad, welches 2000 Teile Wasser, 5 Teile Natriumsulfat, 2 Teile Natriumacetat und 2 Teile 80%-iger Essigsäure enthält, während 5 Minuten bei einer Temperatur von 30°C und einem pH-Wert von 4,5 vorbehandelt. Nach Zugabe einer wässrigen Lösung enthaltend 0,9 Teile des Farbstoffs der Formel (102) und 2 Teile des Fixiermittels der Formel (129) wird die Färbeflotte noch 5 Minuten bei einer Temperatur von 30°C gehalten und anschliessend mit einer Aufheizrate von 1,5°C pro Minute auf eine Temperatur von 100°C erhitzt. Man färbt 40 Minuten bei dieser Temperatur, setzt 15 Teile Dinatriumhydrogenphosphat zu und färbt noch 40 Minuten bei einem pH-Wert von 7 weiter. Man kühlt dann auf 50°C ab und lässt die Färbeflotte ab. Das in einem orangen Farbton gefärbte Wollgewebe wird gespült und getrocknet. Die erhaltene Färbung ist faseregal und weist sehr gute Nassechtheiten auf.

### Färbebeispiel 3:

100 Teile eines Wollgewebes werden in einem wässrigen Bad, welches 2000 Teile Wasser, 5 Teile Natriumsulfat, 2 Teile Natriumacetat und 2 Teile 80%-iger Essigsäure enthält, während 5 Minuten bei einer Temperatur von 30°C und einem pH-Wert von 4,5 vorbehandelt. Nach Zugabe einer wässrigen Lösung enthaltend 0,9 Teile des Farbstoffs der Formel (102) wird die Färbeflotte noch 5 Minuten bei einer Temperatur von 30°C gehalten und anschliessend mit einer Aufheizrate von 1,5°C pro Minute auf eine Temperatur von 100°C erhitzt. Man färbt 40 Minuten bei dieser Temperatur, setzt 15 Teile Dinatriumhydrogenphosphat und 2 Teile des Fixiermittels der Formel (129) zu und färbt noch 40 Minuten bei einem pH-Wert von 7 weiter. Man kühlt dann auf 50°C ab und lässt die Färbeflotte ab. Das in einem orangen Farbton gefärbte Wollgewebe wird gespült und getrocknet. Die erhaltene Färbung ist faseregal und weist sehr gute Nassechtheiten auf.

### Färbebeispiele 4 bis 27:

Verfährt man wie in Färbebeispiel 3 angegeben, verwendet jedoch anstelle von 0,9 Teilen des Farbstoffs der Formel (102) eine äquimolare Menge eines der Farbstoffe gemäss den Herstellungsbeispielen 2 bis 25, so erhält man ebenfalls faseregal gefärbte Wollgewebe mit guten Nassechtheiten.

Anstelle des Verfahrens gemäss Färbebeispiel 3 kann auch gemäss Färbebeispiel 1 oder 2 verfahren werden.

### Färbebeispiele 28 bis 46:

Verfährt man wie in Färbebeispiel 3 angegeben, verwendet jedoch anstelle von 2 Teilen des Fixiermittels der Formel (129) eine äquimolare Menge eines der Fixiermittel gemäss den Beispielen 1, 2 und 4 bis 20, so erhält man ebenfalls faseregal gefärbte Wollgewebe mit guten Nassechtheiten.

Anstelle des Verfahrens gemäss Färbebeispiel 3 kann auch gemäss Färbebeispiel 1 oder 2 verfahren werden.

## Patentansprüche

1. Verfahren zum Färben von natürlichen oder synthetischen Polyamidfasermaterialien, dadurch gekennzeichnet, dass man diese Fasermaterialien mit mindestens einem anionischen Säurefarbstoff der Formel 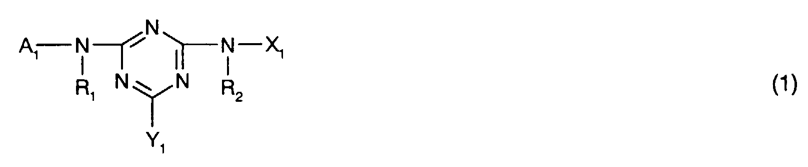
färbt und das genannte Fasermaterial während oder nach dem Färbeprozess mit einem farblosen, sulfo- oder sulfatogruppenhaltigen, mindestens zwei faserreaktive Gruppen enthaltenden Fixiermittel behandelt, wobei
R₁ und R₂ unabhängig voneinander Wasserstoff oder gegebenenfalls substituiertes C₁-C₄-Alkyl sind,
X₁ gegebenenfalls substituiertes C₁-C₈-Alkyl, C₅-C₇-Cycloalkyl, Phenyl oder Naphthyl ist oder der Rest der Formel -N(R₂)-X₁ ein gegebenenfalls weitere Heteroatome enthaltender Ring ist,
Y₁ ein Rest der Formel 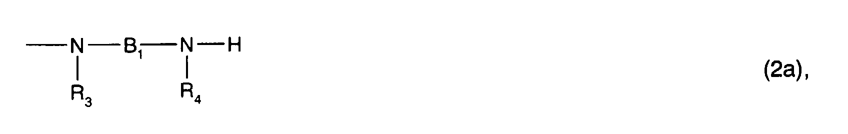 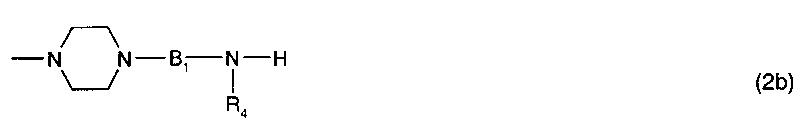 oder 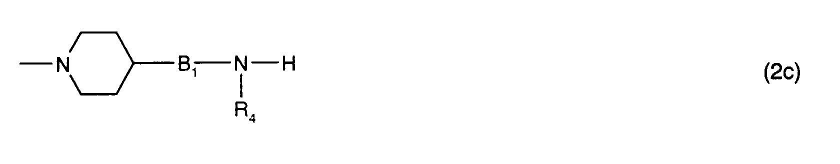
ist, worin
B₁ ein farbloses organisches Brückenglied,
R₃ Wasserstoff oder gegebenenfalls substituiertes C₁-C₄-Alkyl, und
R₄ Wasserstoff oder gegebenenfalls substituiertes C₁-C₈-Alkyl, C₅-C₇-Cycloalkyl, Phenyl oder Naphthyl ist, und
A₁ der Rest eines Monoazofarbstoffes der Formel 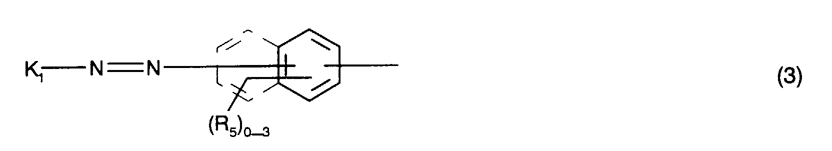 ist, worin
K₁ ein Rest der Benzol- oder Naphthalinreihe oder ein heterocyclischer Rest ist und (R₅)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanyolamino, Ureido, Halogen, Carboxy und Sulfo steht, oder
A₁ der Rest eines Polyazo-, Metallkomplexazo-, Anthrachinon-, Formazan-, Phthalocyanin- oder Dioxazinfarbstoffes ist.

2. Verfahren gemäss Anspruch 1, dadurch gekennzeichnet, dass
R₁ und R₂ unabhängig voneinander Wasserstoff oder C₁-C₄-Alkyl sind.

3. Verfahren gemäss einem der Ansprüche 1 und 2, dadurch gekennzeichnet, dass X₁ C₁-C₈-Alkyl, gegebenenfalls duch C₁-C₄-Alkyl substituiertes C₅-C₇-Cycloalkyl oder gegebenenfalls durch C₁-C₄-Alkyl, C₁-C₄-Alkoxy, C₂-C₄-Alkanyolamino, Ureido, Halogen, Carboxy oder Sulfo substituiertes Phenyl oder Naphthyl ist.

4. Verfahren gemäss einem der Ansprüche 1 bis 3, dadurch gekennzeichnet, dass X₁ gegebenenfalls durch C₁-C₄-Alkyl, C₁-C₄-Alkoxy, C₂-C₄-Alkanyolamino, Ureido, Halogen, Carboxy oder Sulfo substituiertes Phenyl, insbesondere Phenyl, ist.

5. Verfahren gemäss einem der Ansprüche 1 bis 4, dadurch gekennzeichnet, dass B₁ ein C₁-C₁₀-Alkylenrest ist, welcher durch 1, 2 oder 3 Glieder aus der Gruppe -NH-, -N(CH₃)- oder -O- unterbrochen sein kann und unsubstituiert oder durch Hydroxy, Sulfo, Sulfato, Cyano oder Carboxy substituiert ist.

6. Verfahren gemäss einem der Ansprüche 1 bis 5, dadurch gekennzeichnet, dass R₃ Wasserstoff oder C₁-C₄-Alkyl ist.

7. Verfahren gemäss einem der Ansprüche 1 bis 6, dadurch gekennzeichnet, dass R₄ Wasserstoff oder gegebenenfalls durch Hydroxy, Sulfo, Sulfato, Cyano oder Carboxy substituiertes C₁-C₈-Alkyl ist.

8. Verfahren gemäss einem der Ansprüche 1 bis 7, dadurch gekennzeichnet, dass R₄ Wasserstoff oder C₁-C₄-Alkyl, insbesondere Wasserstoff, ist.

9. Verfahren gemäss einem der Ansprüche 1 bis 8, dadurch gekennzeichnet, dass R₃ und R₄ unabhängig voneinander Wasserstoff oder C₁-C₄-Alkyl sind und B₁ ein C₁-C₁₀-Alkylenrest ist.

10. Verfahren gemäss einem der Ansprüche 1 bis 9, dadurch gekennzeichnet, dass R₂ C₁-C₄-Alkyl ist.

11. Verfahren gemäss einem der Ansprüche 1 bis 10, dadurch gekennzeichnet, dass A₁ ein Rest der Formel (3) oder der Rest eines Disazo- oder Anthrachinonfarbstoffes ist.

12. Verfahren gemäss einem der Ansprüche 1 bis 11, dadurch gekennzeichnet, dass A₁ ein Rest der Formel (3) oder ein Rest der Formel 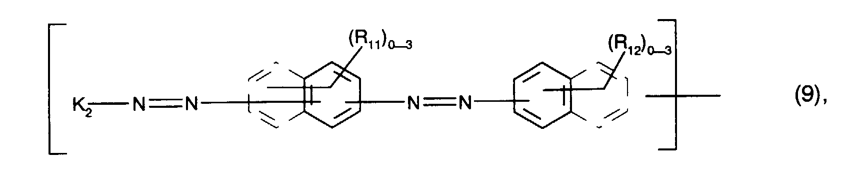 worin
(R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen, und
K₂ ein Rest der Benzol- oder Naphthalinreihe oder ein heterocyclischer Rest ist, oder ein Rest der Formel 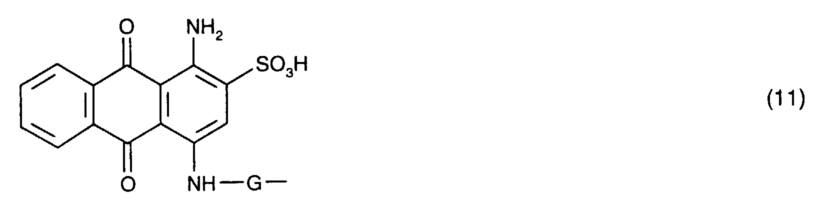 ist, worin G einen unsubstituierten oder durch C₁-C₄-Alkyl, C₁-C₄-Alkoxy, Halogen, Carboxy oder Sulfo substituierten Phenylenrest oder einen Cyclohexylen-, Phenylenmethylen- oder C₂-C₆-Alkylenrest bedeutet.

13. Verfahren gemäss einem der Ansprüche 1 bis 12, dadurch gekennzeichnet, dass A₁ ein Rest der Formel 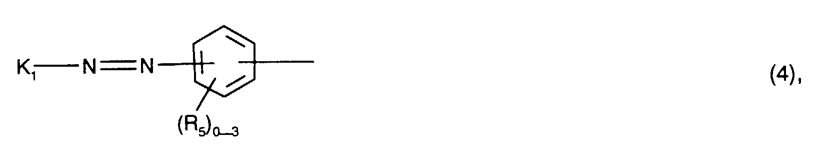 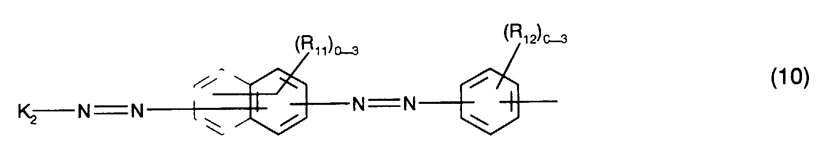 oder 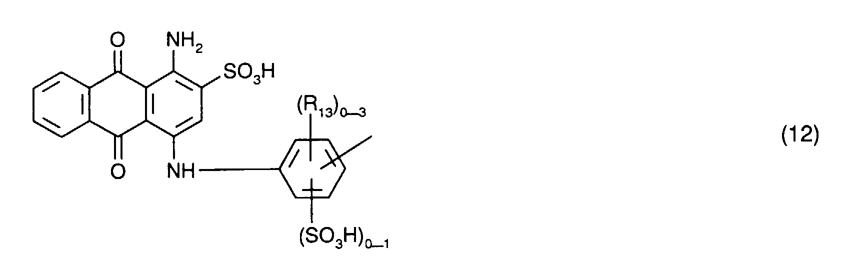 ist, worin
(R₅)₀₋₃ für 0 bis 3 gleiche oder voneinander verschiedene Substituenten ausgewählt aus der Gruppe C₁-C₄-Alkyl, C₁-C₄-Alkoxy, Halogen und Sulfo steht,
(R₁₁)₀₋₃ und (R₁₂)₀₋₃ unabhängig voneinander für 0 bis 3 gleiche oder voneinander verschiedene Substituenten ausgewählt aus der Gruppe C₁-C₄-Alkyl, C₁-C₄-Alkoxy, C₂-C₄-Alkanoylamino, Halogen, Hydroxyl, Cyano, Carbamoyl, Carboxyl, Sulfo, Amino und N-Mono- oder N,N-Di-C₁-C₄-Alkylamino stehen,
(R₁₃)₀₋₃ für 0 bis 3 gleiche oder voneinander verschiedene Substituenten ausgewählt aus der Gruppe C₁-C₄-Alkyl, C₁-C₄-Alkoxy, Halogen, Carboxy und Sulfo steht, und K₁ und K₂ unabhängig voneinander ein Rest der Formel 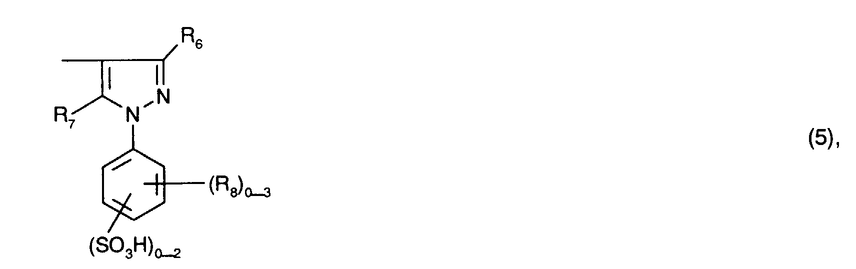 worin R₆ Methyl oder Carboxyl,
R₇ Amino oder Hydroxyl ist und
(R₈)₀₋₃ für 0 bis 3 gleiche oder voneinander verschiedene Substituenten ausgewählt aus der Gruppe C₁-C₄-Alkyl, C₁-C₄-Alkoxy, C₂-C₄-Alkanyolamino, Ureido, Halogen, Carboxyl und Sulfo steht,
oder ein Rest der Formel 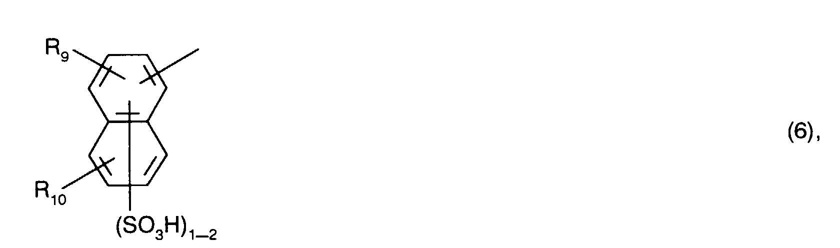 worin R₉ Wasserstoff, Amino oder N-Mono- oder N,N-Di-C₁-C₄-Alkylamino und R₁₀ Wasserstoff oder Hydroxyl ist, sind.

14. Verfahren gemäss einem der Ansprüche 1 bis 13, dadurch gekennzeichnet, dass man als Fixiermittel eine Verbindung der Formel 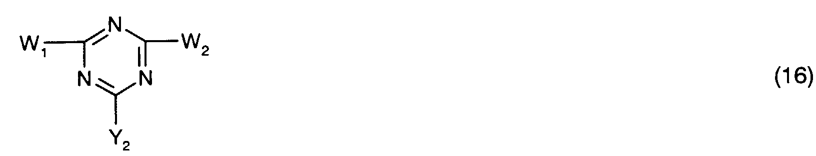 oder 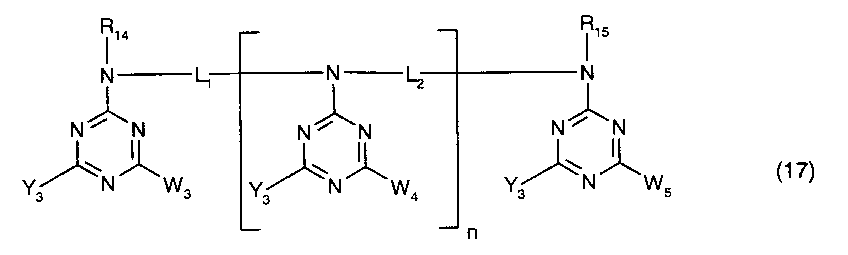
verwendet, worin
R₁₄ und R₁₅ unabhängig voneinander Wasserstoff oder gegebenenfalls substituiertes C₁-C₄-Alkyl,
Y₂ und Y₃ unabhängig voneinander Fluor, Chlor, Amino, gegebenenfalls im Alkylteil substituiertes N-Mono- oder N,N-Di-C₁-C₄-Alkylamino, gegebenenfalls im Cycloalkylring substituiertes C₅-C₇-Cycloalkylamino, gegebenenfalls im Phenylring substituiertes Phenylamino oder N-C₁-C₄-Alkyl-N-phenylamino oder gegebenenfalls weitere Heteroatome enthaltende N-Heterocyclen sind,
L₁ und L₂ ein farbloses, organisches Brückenglied sind,
n die Zahl 0 oder 1 ist,
W₁, W₂, W₃, W₄ und W₅ unabhängig voneinander einen Rest der Formel
-NH-(CH₂)₂₋₃-O-(CH₂)₂₋₃-SO₂Z (18)
oder 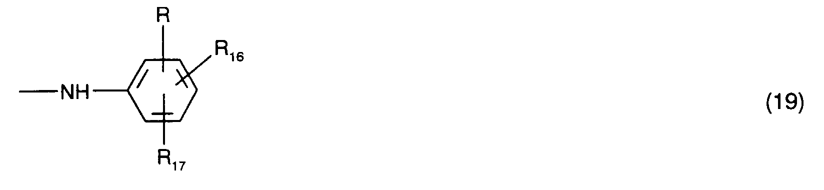
bedeuten, wobei
R₁₆ und R₁₇ unabhängig voneinander Wasserstoff, C₁-C₄-Alkyl, C₁-C₄-Alkoxy, C₂-C₄-Alkanoylamino, Ureido, Halogen, Carboxyl oder Sulfo sind,
Z ein Rest der Formel -CH₂CH₂-U oder -CH=CH₂ und U eine Abgangsgruppe ist, und R ein Rest der Formel
-SO₂Z (20a),
-CONH-(CH₂)₂₋₃-SO₂Z (20b),
-NH-CO-CH(Hal)-CH₂-Hal (20c),
-NH-CO-C(Hal)=CH₂ (20d),
-NH-CO-CH=CH₂ (20e)
oder
-NH-CO-CH₂-Cl (20f)
ist und Hal Halogen bedeutet und Z die oben angegebenen Bedeutungen hat.

15. Verfahren gemäss einem der Ansprüche 1 bis 14, dadurch gekennzeichnet, dass man nach dem Ausziehverfahren färbt.

16. Verfahren gemäss einem der Ansprüche 1 bis 15, dadurch gekennzeichnet, dass man Wolle oder synthetisches Polyamidfasermaterial, insbesondere Wolle, färbt.

17. Verbindungen der Formel 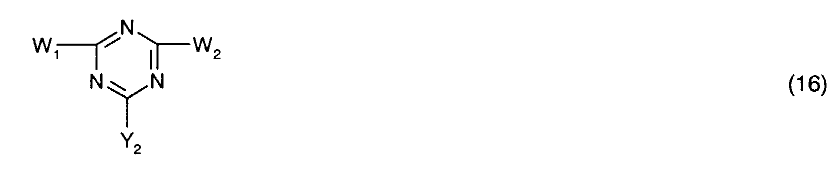 oder 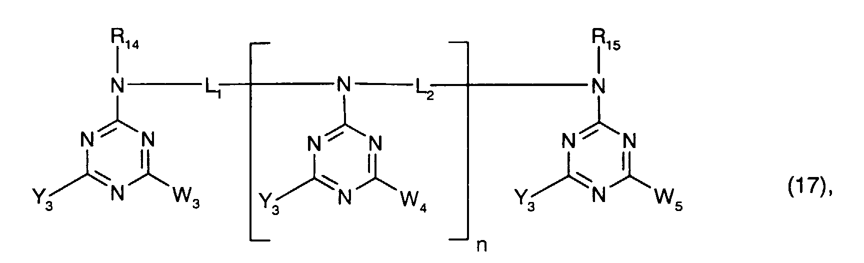 worin
R₁₄ und R₁₅ unabhängig voneinander Wasserstoff oder gegebenenfalls substituiertes C₁-C₄-Alkyl,
Y₂ und Y₃ unabhängig voneinander Fluor, Chlor, Amino, gegebenenfalls im Alkylteil substituiertes N-Mono- oder N,N-Di-C₁-C₄-Alkylamino, gegebenenfalls im Cycloalkylring substituiertes C₅-C₇-Cycloalkylamino, gegebenenfalls im Phenylring substituiertes Phenylamino oder N-C₁-C₄-Alkyl-N-phenylamino oder gegebenenfalls weitere Heteroatome enthaltende N-Heterocyclen sind,
L₁ und L₂ ein farbloses, organisches Brückenglied sind,
n die Zahl 0 oder 1 ist,
W₁, W₂, W₃, W₄ und W₅ unabhängig voneinander einen Rest der Formel
-NH-(CH₂)₂₋₃-O-(CH₂)₂₋₃-SO₂Z (18)
oder 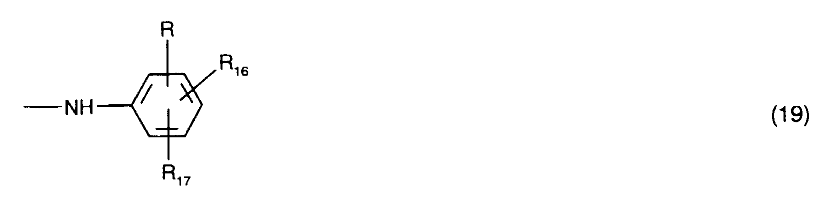 bedeuten, wobei
R₁₆ und R₁₇ unabhängig voneinander Wasserstoff, C₁-C₄-Alkyl, C₁-C₄-Alkoxy, C₂-C₄-Alkanoylamino, Ureido, Halogen, Carboxyl oder Sulfo sind,
Z ein Rest der Formel -CH₂CH₂-U oder -CH=CH₂ und U eine Abgangsgruppe ist, und R ein Rest der Formel
-SO₂Z (20a),
-CONH-(CH₂)₂₋₃-SO₂Z (20b),
-NH-CO-CH(Hal)-CH₂-Hal (20c),
-NH-CO-C(Hal)=CH₂ (20d),
-NH-CO-CH=CH₂ (20e)
oder
-NH-CO-CH₂-Cl (20f)
ist und Hal Halogen bedeutet und Z die oben angegebenen Bedeutungen hat,
mit der Massgabe, dass, falls die Verbindungen der Formel (16) einen Rest W₁ und einen Rest W₂ der Formel (19) enthalten und Y₂ Chlor oder sulfosubstituiertes Phenyl bedeutet und R ein Rest der Formel (20a), (20c) oder (20d) ist, die Verbindungen der Formel (16) zwei voneinander verschiedene Reste R enthalten, und
der Massgabe, dass die Verbindungen der Formel (17) nicht zwei identische Reste W₃ und W₅ der Formel (19) enthalten, falls R ein Rest der Formel (20a), (20c) oder (20d) ist und Y₃ Chlor bedeutet und n die Zahl 0 ist und L₁ ein gegebenenfalls substituiertes Phenylen- oder ein gegebenenfalls substituiertes Stilben-Brückenglied ist.

18. Verwendung der Verbindungen gemäss Anspruch 17 als Fixiermittel.
